(19) Europäisches Patentamt
European Patent Office
Office européen des brevets

(11) EP 1 334 141 B1

(12) # EUROPÄISCHE PATENTSCHRIFT

(45) Veröffentlichungstag und Bekanntmachung des Hinweises auf die Patenterteilung:
**24.08.2005 Patentblatt 2005/34**

(21) Anmeldenummer: **01980508.4**

(22) Anmeldetag: **23.10.2001**

(51) Int Cl.⁷: **C08F 20/12**, C10M 145/12

(86) Internationale Anmeldenummer:
**PCT/EP2001/012227**

(87) Internationale Veröffentlichungsnummer:
**WO 2002/038633 (16.05.2002 Gazette 2002/20)**

(54) **VERFAHREN ZUR HERSTELLUNG VON POLYMERZUSAMMENSETZUNGEN SOWIE VERWENDUNG**

METHOD FOR PRODUCING POLYMER COMPOSITIONS AND THE USE THEREOF

PROCEDES DE FABRICATION DE COMPOSITIONS POLYMERES ET UTILISATION

(84) Benannte Vertragsstaaten:
**AT BE CH CY DE DK ES FI FR GB GR IE IT LI LU MC NL PT SE TR**

(30) Priorität: **13.11.2000 US 709531**

(43) Veröffentlichungstag der Anmeldung:
**13.08.2003 Patentblatt 2003/33**

(73) Patentinhaber: **RohMax Additives GmbH**
**64293 Darmstadt (DE)**

(72) Erfinder: **SCHERER, Markus**
**66822 Lebach (DE)**

(56) Entgegenhaltungen:
**WO-A-96/30421** **WO-A-97/47661**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 334 141 B1

Printed by Jouve, 75001 PARIS (FR)

## Beschreibung

Die Erfindung betrifft Verfahren zur Herstellung von Polymerzusammensetzungen, wobei man ethylenisch ungesättigte Monomere mittels Initiatoren, die eine übertragbare Atomgruppe aufweisen, und einem oder mehrere Katalysatoren, die mindestens ein Übergangsmetall umfassen, in Gegenwart von Liganden, die mit dem oder den metallischen Katalysatoren eine Koordinationsverbindung bilden können, polymerisiert. Die Erfindung bezieht sich auch auf die Verwendung dieser Polymerzusammensetzungen sowie auf Verfahren zur Isolierung von Polymeren aus einer solchen Polymerlösung.

Die radikalische Polymerisation ist ein wichtiges kommerzielles Verfahren zur Herstellung einer Vielfalt von Polymeren, wie beispielsweise PMMA und Polystyrol. Nachteilig ist hierbei, daß der Aufbau der Polymere, das Molekulargewicht und die Molekulargewichtsverteilung relativ schlecht gesteuert werden können.

Eine Lösung dieser Probleme liefert das sogenannte ATRP-Verfahren (=Atom Transfer Radical Polymerisation). Es wird angenommen, daß es sich hierbei um eine "lebende" radikalische Polymerisation handelt, ohne daß durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so daß die Atomgruppe auf die wachsende Polymerkette rückübertragen wird, wodurch ein kontrolliertes : Polymerisationssystem gebildet wird. Dementsprechend kann der Aufbau des Polymers, das Molekulargewicht und die Molekulargewichtsverteilung gesteuert werden.

Diese Reaktionsführung wird beispielsweise von J-S. Wang, et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/20050, WO 98/40415 und WO 99/10387 Varianten der zuvor erläuterten ATRP.

Der oben beschriebene Mechanismus ist nicht unumstritten. So wird beispielsweise in WO 97/47661 beschrieben, daß die Polymerisation nicht durch einen radikalischen Mechanismus sondern durch Insertion erfolgt. Für die vorliegende Erfindung ist diese Differenzierung jedoch ohne belang, da bei der in WO 97/47661 offenbarten Reaktionsführung Verbindungen verwendet werden, die auch bei einer ATRP eingesetzt werden.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe ebenso wie eine geringe Konzentration freier Radikale im Gleichgewicht wesentlich für eine enge Molekulargewichtsverteilung sind. Ist die Konzentration an freien Radikalen zu hoch, treten typische Abbruchreaktionen auf, die für eine breite Molekulargewichtsverteilung verantwortlich sind. Die Austauschrate ist beispielsweise abhängig von der übertragbaren Atomgruppe, dem Übergangsmetall, den Liganden und dem Anion der Übergangsmetallverbindung. Wertvolle Hinweise zur Auswahl dieser Komponenten findet der Fachmann beispielsweise in WO 98/40415.

Die Vorteile bekannter ATRP-Polymerisationsverfahren beschränken sich jedoch hauptsächlich auf Monomere, die selbst polar sind oder die in polaren Medien eine gute Löslichkeit zeigen. Zwar ist die vereinzelte Verwendung von unpolaren aprotischen Kohlenwasserstoffen wie Benzol, Toluol, Xylol, Cyclohexan und Hexan ebenfalls literaturbekannt, die mit diesen Lösungsmitteln hergestellten Polymere weisen jedoch deutlich höhere Polydispersitäten auf. Dieser Effekt wird beispielsweise in WO 98/40415 beschrieben.

Darüber hinaus offenbart dieses Dokument zwar die Möglichkeit polare Monomere, wie Methylmethacrylat oder Styrol, mittels metallischem Kupfer zu polymerisieren, allerdings ist die Molekulargewichtsverteilung wesentlich ungünstiger als bei Verwendung einer Mischung von $Cu^0/CuBr$ bzw. $Cu^0/CuBr_2$.

In Pol. Preprint (ACS, Div. Pol. Chem.), 1999, 40(2), 432 beschreiben M.J.Ziegler et al. unter anderem eine schlechte Steuerbarkeit der Polymerisation von t-Butylmethacrylat, falls diese in Masse stattfindet. Bei Verwendung von ca. 20 bis 25 Gew.-% an polaren Lösungsmitteln läßt sich sowohl die Molmasse als auch die Polydispersität verbessern. Allerdings können ethylenisch ungesättigte Monomermischungen, die zu mindestens 50 Gew.-% ethylenisch ungesättigte Esterverbindungen mit Alkyl- oder Heteroalkylketten mit mindestens 8 Kohlenstoffatome enthalten, wegen der begrenzten Löslichkeit von ethylenisch ungesättigten Esterverbindungen mit Alkyl- oder Heteroalkylresten mit mindestens 8 Kohlenstoffatomen in polaren Lösungsmitteln nur schlecht mittels der bekannten ATRP-Verfahren polymerisiert werden. Darüber hinaus müssen diese großen Mengen an polaren Lösungsmitteln, je nach Verwendung, nach Herstellung der Polymere von der Zusammensetzung abgetrennt werden.

In Anbetracht des Standes der Technik ist es nun Aufgabe der vorliegenden Erfindung, Verfahren zur Herstellung einer Polymerzusammensetzung zur Verfügung zu stellen, wobei die in der Zusammensetzung enthaltenen Polymere zu mindestens 50 Gew.-% aus (Meth)acrylaten mit Alkyl- oder Heteroalkylketten mit mindestens 8 Kohlenstoffatomen aufgebaut sein sollen.

Darüber hinaus sollen die in der Zusammensetzung enthaltenen Polymere eine enge Molekulargewichtsverteilung aufweisen, Insbesondere soll bei der Herstellung der Polymermischung der Einsatz aufwendigerer Verfahren, wie etwa der anionischen Polymerisation, vermieden werden.

Des weiteren war Aufgabe der vorliegenden Erfindung ein Verfahren zur Polymerisation zur Verfügung zu stellen, durch das Polymere mit höheren oder hohen Molekulargewichten erhalten werden könne.

Eine weitere Aufgabe bestand darin, ein kostengünstig durchführbares Verfahren anzugeben, das großtechnisch anwendbar ist. Darüber hinaus sollte das Verfahren mit kommerziell erhältlichen Komponenten leicht und einfach ausführbar sein.

Gelöst werden diese sowie weitere nicht explizit genannten Aufgaben, die jedoch aus den hierin einleitend diskutierten Zusammenhängen ohne weiteres ableitbar oder erschließbar sind, durch ein Verfahren zur Herstellung einer Polymerzusammensetzung mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt. Hinsichtlich des Verfahrens zur Herstellung von Polymeren liefert der unabhängige Verfahrensanspruch eine Lösung der zugrunde liegenden Aufgabe, während der Anspruch aus der Verwendungskategorie eine bevorzugte Verwendung einer gemäß dem vorliegenden Verfahren hergestellten Polymerlösung schützt.

Dadurch, daß man ethylenisch ungesättigte Monomere, die 50 bis 100 Gew.-%, bezogen auf das Gesamtgewicht der ethylenisch ungesättigten Monomeren, eine oder mehrere ethylenisch ungesättigte Esterverbindungen der Formel (I)

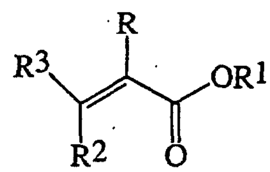

(I),

worin R Wasserstoff oder Methyl, $R^1$ einen linearen oder verzweigten Alkylrest mit 8 bis 40, vorzugsweise 10 bis 40, Kohlenstoffatomen, $R^2$ und $R^3$ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt, aufweisen, in Gegenwart von Kupfer polymerisiert, wobei die Menge an Kupfer der Oxidationsstufen (I) und (II) in der Zusammensetzung $\leq$ 200 ppm, bezogen auf das gesamte Gewicht der Zusammensetzung vermindert um das Gewicht an Kupfer der Oxidationsstufe (O) in der Zusammensetzung, ist, gelingt es auf nicht ohne weiteres vorhersehbare Weise ein Verfahren zur Herstellung einer Polymerzusammensetzung zur Verfügung zu stellen, mit welchem eine enge Verteilung der Polymere erzielt werden kann. Hierbei polymerisiert man ethylenisch ungesättigte Monomere mittels Initiatoren, die eine übertragbare Atomgruppe aufweisen, und einem oder mehrere Katalysatoren, die mindestens ein Übergangsmetall umfassen, in Gegenwart von Liganden, die mit dem oder den metallischen Katalysatoren eine Koordinationsverbindung bilden können. Diese Herstellungsart ist besonders kostengünstig durchführbar und insofern technisch interessant.

Zugleich lassen sich durch das erfindungsgemäße Verfahren eine Reihe weiterer Vorteile erzielen. Hierzu gehören unter anderem:

⇒ Eine enge Verteilung der Polymere in den durch das Verfahren hergestellten Polymerzusammensetzungen.

⇒ Das erfindungsgemäße Verfahren erlaubt eine hervorragende Kontrolle des Molekulargewichts der in den Zusammensetzungen enthaltenen Polymeren.

⇒ Hinsichtlich Druck, Temperatur und Lösungsmittel ist die Durchführung der Polymerisation relativ unproblematisch, auch bei moderaten Temperaturen werden unter bestimmten Umständen akzeptable Ergebnisse erzielt.

⇒ Mit Hilfe des erfindungsgemäßen Verfahrens lassen sich hohe Ausbeuten erzielen.

⇒ Das erfindungsgemäße Verfahren ist arm an Nebenreaktionen.

⇒ Das Verfahren ist kostengünstig durchführbar. Hierbei sollte berücksichtigt werden, daß nur sehr geringe Mengen an Katalysator eingesetzt werden.

⇒ Des weiteren kann für den Fall, dass metallisches Kupfer als Kupferquelle eingesetzt wird, dieses problemlos aus der Reaktionsmischung entfernt werden, wobei dieser Katalysator in weiteren Reaktionen ohne Aufreinigung wiederverwendet werden kann.

⇒ Mit Hilfe des Verfahrens der vorliegenden Erfindung können Polymere mit einem vorher definierten Aufbau und gezielter Struktur hergestellt werden.

⇒ Für viele Zwecke können die so erhaltenen Polymerzusammensetzungen eingesetzt werden, ohne daß sich in Lösung befindlicher Kupferkatalysator abgetrennt werden muß.

⇒ Mit Hilfe des erfindungsgemäßen Verfahrens lassen sich Monomere mit ungesättigten Esterverbindungen copolymerisieren, die selbst als Ligand wirken können. Besonders überraschend wird hierbei eine enge Molekulargewichtsverteilung erhalten.

Beim erfindungsgemäßen Verfahren wird in Gegenwart von Kupfer polymerisiert. Für die Erfindung von Bedeutung ist dabei im Sinne der Erfindung diejenige Menge an Kupfer, die während der Polymerisation in der Polymerisationszusammensetzung als oxidiertes Kupfer der Oxidationsstufen (I) und (II), vorzugsweise der Oxidationsstufe (+1), vorliegt. Ob tatsächlich auch Kupfer der Oxidationsstufe (+2) vorliegen kann und wenn ja, ob dies für den Verlauf der Polymerisation Relevanz besitzt, ist für die Erfindung selbst unerheblich. Die Menge an Kupfer der Oxidationsstufe (+2) wird jedoch aufgrund der angewandten Bestimmungsmethoden zusammen mit Kupfer der Oxidationsstufe (+1) bilanziert. Die Menge an Kupfer der Oxidationsstufe (0) in der Polymerisationszusammensetzung kann den Wert von 200 ppm deutlich überschreiten, es besteht keine Einschränkung nach oben, solange die Menge an Kupfer der Oxidationsstufen (I) und (II) gering genug ist.

Für die Nomenklatur der Erfindung sollen die Schreibweisen "Kupfer der Oxidationsstufe (I)" und "Kupfer der Oxidationsstufe (II)" gleichbedeutend sein mit "Kupfer der Oxidationsstufe (+1)" bzw. "Kupfer der Oxidationsstufe (+2)".

In Verbindung mit den in der Erfindung eingesetzten Monomeren führen bereits sehr geringe Mengen an Kupfer der Oxidationsstufen (I) und (II) erstaunlicherweise zu vergleichsweise eng verteilten Polymeren. Hierbei beträgt die Menge an oxidiertem Kupfer der Stufen (I) und (II) in der Zusammensetzung bis zu 200 ppm, vorzugsweise bis zu 150 ppm und besonders bevorzugt bis zu 100 ppm, bezogen auf das Gewicht der gesamten Zusammensetzung. Die Menge an Kupfer in ppm wird als Summe der Gewichte Cu(I) und Cu(II) bezogen auf das Gewicht der gesamten Zusammensetzung angegeben, vermindert um das Gewicht an Kupfer der Oxidationsstufe (O) in der Zusammensetzung. Die minimal zur Katalyse der ATRP benötigte Menge an oxidiertem Kupfer kann je nach spezieller Polymerisationszusammensetzung über einen gewissen Bereich variieren. Allgemein sind wenigstens 5 bis 10 ppm von Vorteil. Bevorzugt sind mehr als 10 ppm, besonders zweckmäßig 20 und mehr ppm. Ein sehr zweckmäßiger Bereich umfaßt 10 bis 200 ppm, bevorzugt 20 bis 200 ppm und ganz besonders bevorzugt 50 bis 200 ppm. Für die meisten Anwendungen ist der Bereich von 50 bis 100 ppm als optimal anzusehen.

Das für die ATRP von bestimmten längerkettig veresterten Monomeren der Erfindung interessante oxidierte Kupfer (Kupfer der Oxidationsstufen +1 und +2) kann aus verschiedenen Quellen generiert werden.

In einer ersten und ganz besonders bevorzugten Verfahrensvariante kennzeichnet sich das Verfahren der Erfindung dadurch, dass als Quelle für das Kupfer der Oxidationsstufen (I) und (II) in der Polymerisationszusammensetzung metallisches Kupfer eingesetzt wird.

Metallisches Kupfer kann der Reaktionsmischung in jeder beliebigen Form zugesetzt werden. Vorzugsweise dienen als Kupferquellen unter anderem Kupferblech, Kupferdraht, Kupferfolie, Kupferspäne, Kupfernetz, Kupfergeflecht, Kupfergewebe und/oder Kupferpulver sowie Kupferstaub. Hierbei sind leicht wieder aus der Polymerzusammensetzung entfernbare Quellen, wie Kupferblech, Kupferdraht, Kupferfolie und Kupfergeflecht gegenüber weniger einfach abtrennbaren Quellen wie Kupferpulver oder Kupferstaub bevorzugt.

Noch eine besondere Variante des erfindungsgemäßen Verfahrens geht davon aus, daß man als Quelle für das Kupfer der Oxidationsstufen (I) und (II) ein Kupfersalz in der Polymerisationszusammensetzung einsetzt. Der Einsatz eines Übergangsmetallsalzes des Kupfers in den erfindungsgemäß kennzeichnenden geringen Konzentrationen umfaßt alle Verbindungen des Übergangsmetalls Kupfer, die mit dem ebenfalls einzusetzenden Initiator, bzw. der Polymerkette, die eine übertragbare Atomgruppe aufweist, einen Redox-Zyklus bilden kann. Bei diesen Zyklen bilden die übertragbare Atomgruppe und der Katalysator reversibel eine Verbindung, wobei die Oxidationsstufe des Übergangsmetalls erhöht bzw. erniedrigt wird. Man geht davon aus, daß hierbei Radikale freigesetzt bzw. eingefangen werden, so daß die Radikalkonzentration sehr gering bleibt. Es ist allerdings auch möglich, daß durch die Addition der Übergangsmetallverbindung an die Übertragbare Atomgruppe die Insertion von ethylenisch ungesättigten Monomeren in die Bindung Y-X bzw. $Y(M)_z$-X ermöglicht bzw. erleichtert wird, wobei Y und X die hierin später genannten Bedeutungen haben und M die Monomeren bezeichnet, während z den Polymerisationsgrad darstellt.

Im Sinne der Erfindung kann ein Kupfersalz oder eine Mischung von Kupfersalzen als Kupferquelle und damit als Katalysator eingesetzt werden. Es wird angenommen, daß bei der Polymerisation die Redox-Zyklen der Polymerisation katalysiert werden, wobei beispielsweise das Redoxpaar $Cu^+/Cu^{2+}$ wirksam ist. Dementsprechend werden die

als Kupferquelle einsetzbaren Metallverbindungen als Halogenide, wie beispielsweise Chlorid oder Bromid, als Alkoxid, Hydroxid, Oxid, Sulfat, Phosphat, oder Hexafluorophosphat, Trifluormethansulfat der Reaktionsmischung zugefügt. Zu den bevorzugten metallischen Verbindungen gehören $Cu_2O$, CuBr, CuCl, CuI, $CuN_3$, CuSCN, CuCN, $CuNO_2$, $CuNO_3$, $CuBF_4$, $Cu(CH_3COO)$ und/oder $Cu(CF_3COO)$.

Besonders bevorzugt ist ein Verfahren, bei dem man als Kupfersalz ein Kupferhalogenid, besonders zweckmäßig Kupfer(I)chlorid, einsetzt.

Es können aber auch Verbindungen in höheren Oxidationsstufen, wie beispielsweise $CuBr_2$, $CuCl_2$ und/oder CuO eingesetzt werden. In diesen Fällen kann die Reaktion mit Hilfe klassischer Radikalbildner, wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Es handelt sich hierbei um die Reverse-ATRP, wie diese von Wang und Matyjaszewski in Macromolekules (1995), Bd. 28, S. 7572-7573 beschrieben wurde.

Darüber hinaus können die Übergangsmetalle als Metall in der Oxidationsstufe null, insbesondere in Mischung mit den zuvor genannten Verbindungen zur Katalyse verwendet werden, wie dies beispielsweise in WO 98/40415 dargestellt ist. In diesen Fällen läßt sich die Reaktionsgeschwindigkeit der Umsetzung erhöhen. Man nimmt an, daß hierdurch die Konzentration an katalytisch wirksamer Übergangsmetallverbindung erhöht wird, indem Übergangsmetalle in einer hohen Oxidationsstufe mit metallischem Übergangsmetall komproportionieren. Allerdings wird im Rahmen der Erfindung immer eine ungewöhnlich geringe Gesamtkonzentration an Kupfer (I) und (II) gewährleistet.

Für die Bestimmung der gemäß vorliegender Erfindung relevanten Menge (Konzentration) an Kupfer der Oxidationsstufen (I) und (II) kann man in Abhängigkeit von der Natur der Kupferquelle beispielsweise folgende Wege einschlagen.

Geht man von metallischem Kupfer als Kupferquelle aus, so kann man die metallische Kupferquelle nach Beendigung der Polymerisation aus der Zusammensetzung entfernen, z. B. aus dem Ansatz herausnehmen oder durch Filtration abtrennen. In der verbliebenen Polymerzusammensetzung kann gegebenenfalls nach Durchführung an sich bekannter Aufschlußverfahren die Kupfermenge z. B. durch Atomabsorptionsspektroskopie (AAS) oder Atomemissionsspektroskopie (AES) bestimmt werden. Ermittelt wird demnach die Menge und daraus die Konzentration an Kupfer (I) + Kupfer (II), die im Verlauf der Polymerisation aus der Kupferquelle freigesetzt wurde (oxidiert wurde).

Geht man von einer Kupferverbindung (Kupfersalz) als Quelle aus, so genügt es die Einwaage zu bestimmen und daraus die im System vorhandene maximale Kupfermenge der relevanten Oxidationsstufen (+1) und (+2) abzuleiten.

Gemäß dem Verfahren der vorliegenden Erfindung werden ethylenisch ungesättigte Monomere polymerisiert, die 50 bis 100 Gew.-%, bevorzugt 60 bis 100 Gew.-%, bezogen auf das Gesamtgewicht der ethylenisch ungesättigten Monomere, eine oder mehrere ethylenisch ungesättigte Esterverbindungen der Formel (I)

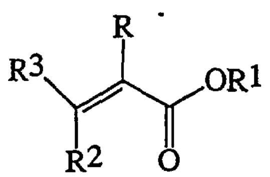

(I),

worin R Wasserstoff oder Methyl, $R^1$ einen linearen oder verzweigten Alkylrest mit 8 bis 40, vorzugsweise 10 bis 40, Kohlenstoffatomen, besonders zweckmäßig 10 bis 24 Kohlenstoffatomen, $R^2$ und $R^3$ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt, aufweisen. Hierbei kann der Alkylrest linear, cyclisch oder verzweigt sein.

Zu diesen Verbindungen gemäß Formel (I) gehören (Meth)acrylate, Maleate und Fumarate, die jeweils mindestens einen Alkoholrest mit 8 bis 40, vorzugsweise 10 bis 40, Kohlenstoffatomen aufweisen.

Hierbei sind (Meth)acrylate der Formel (II) bevorzugt

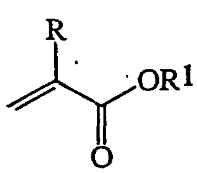

(II),

worin
R Wasserstoff oder Methyl und $R^1$ einen linearen oder verzweigten Alkylrest mit 8 bis 40, vorzugsweise 10 bis 40, Kohlenstoffatomen bedeuten.

Der Ausdruck (Meth)acrylate umfaßt Methacrylate und Acrylate sowie Mischungen aus beiden. Diese Monomere sind bekannt. Zu diesen gehören unter anderem (Meth)acrylate, die sich von gesättigten Alkoholen ableiten, wie 2-Ethylhexyl(meth)acrylat Octyl(meth)acrylat, Nonyl(meth)acrylat, isoOctyl(meth)acrylat, iso-Nonyl(meth)acrylat, 2-tert.-Butylheptyl(meth)acrylat, 3-iso-Propylheptyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl (meth)acrylat, Tetradecyl(meth)acrylat, Pentadecyl(meth)acrylat, Hexadecyl(meth)acrylat, 2-Methylhexadecyl(meth) acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl (meth)acrylat, Cetyleicosyl(meth)acrylat, Stearyleicosyl(meth)acrylat, Docosyl(meth)acrylat und/oder Eicosyltetratriacontyl(meth)acrylat; (Meth)acrylate, die sich von ungesättigten Alkoholen ableiten, wie z. B. Oleyl(meth)acrylat; Cycloalkyl(meth)acrylate, wie 3-Vinyl-2-butyl-cyclohexyl(meth)acrylat und Bornyl(meth)acrylat.

Die Esterverbindungen mit langkettigem Alkoholrest lassen sich beispielsweise durch Umsetzen von (Meth) acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICI; Nafol® 1620, Alfol® 610 und Alfol® 810 von Condea; Epal® 610 und Epal® 810 von Ethyl Corporation; Linevol® 79, Linevol® 911 und Dobanol® 25L von Shell AG; Lial® 125 von Condea Augusta, Mailand; Dehydad® und Lorol® von Henkel KGaA sowie Linopol® 7-11 und Acropol® 91 Ugine Kuhlmann.

Neben den als Komponente a) bezeichneten ethylenisch ungesättigten Esterverbindungen, die sich von Alkoholen mit 8 bis 40 Kohlenstoffen ableiten, kann die Monomermischung auch weitere ethylenisch ungesättigte Monomere enthalten, die mit den zuvor genannten Esterverbindungen copolymerisierbar sind. Zu diesen Monomeren gehören unter anderem

b) 0 bis 40 Gew.-%, insbesondere 0,5 bis 20 Gew.-% eines oder mehrerer (Meth)acrylate der Formel (III)

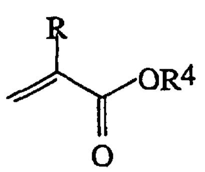

(III),

worin R Wasserstoff oder Methyl und $R^4$ einen linearen oder verzweigten Alkylrest mit 1 bis 7 Kohlenstoffatomen bedeuten,

c) 0 bis 40 Gew.-%, insbesondere 0,5 bis 20 Gew.-% eines oder mehrerer (Meth)acrylate der Formel (IV)

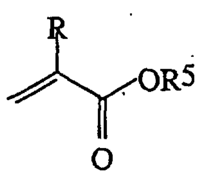

(IV),

worin R Wasserstoff oder Methyl und $R^5$ einen mit einer OH-Gruppe substituierten Alkylrest mit 2 bis 20, insbesondere 2 bis 6 Kohlenstoffatomen oder einen alkoxylierten Rest der Formel (V)

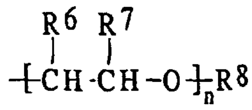

(V),

worin $R^6$ und $R^7$ unabhängig für Wasserstoff oder Methyl, $R^8$ Wasserstoff oder einen Alkylrest mit 1 bis 40 Kohlenstoffatomen un n eine ganze Zahl von 1 bis 60 steht, bedeuten,

d) 0 bis 40 Gew.-%, insbesondere 0,5 bis 20 Gew.-% eines oder mehrerer (Meth)acrylate der Formel (VI)

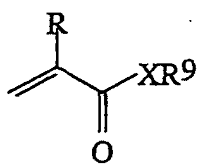

(VI),

worin R Wasserstoff oder Methyl, X Sauerstoff oder eine Aminogruppe der Formel -NH- oder $-NR^{10}-$, worin $R^{10}$ für einen Alkylrest mit 1 bis 40 Kohlenstoffatomen steht, und $R^9$ einen mit mindestens einer $-NR^{11}R^{12}$-Gruppe substituierten linearen oder verzweigten Alkylrest mit 2 bis 20, vorzugsweise 2 bis 6 Kohlenstoffatomen bedeuten, wobei $R^{11}$ und $R^{12}$ unabhängig von einander für Wasserstoff, einen Alkylrest mit 1 bis 20, vorzugsweise 1 bis 6 stehen oder worin $R^{11}$ und $R^{12}$ unter Einbeziehung des Stickstoffatoms und gegebenenfalls eines weiteren Stickstoff oder Sauerstoffatoms einen 5- oder 6-gliederigen Ring bilden, der gegebenenfalls mit $C_1$-$C_6$-Alkyl substituiert sein kann, und

e) 0 bis 40 Gew.-%, insbesondere 0,5 bis 20 Gew.-% eines oder mehrerer Comonomere, wobei sich die Angabe Gew.-% jeweils auf das Gesamtgewicht der ethylenisch ungesättigten Monomere bezieht.

Beispiele für Komponente b) sind unter anderem (Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert-Butyl(meth)acrylat, Pentyl(meth)acrylat, Hexyl(meth)acrylat und Heptyl(meth)acrylat; Cycloalkyl(meth)acrylate, wie Cyclopentyl(meth)acrylat und Cyclohexyl(meth)acrylat;
(Meth)acrylate, die sich von ungesättigten Alkoholen ableiten, wie 2-Propinyl(meth)acrylat und Allyl(meth)acrylat, Vinyl (meth)acrylat.

(Meth)acrylate gemäß Formel (IV) sind dem Fachmann bekannt. Zu diesen zählen unter anderem Hydroxylalkyl(meth)acrylate, wie
3-Hydroxypropylmethacrylat,
3,4-Dihydroxybutylmethacrylat,
2-Hydroxyethylmethacrylat,
2-Hydroxypropylmethacrylat, 2,5-Dimethyl-1,6-hexandiol(meth)acrylat,
1,10-Decandiol(meth)acrylat,
1,2-Propandiol(meth)acrylat;
Polyoxyethylen- und Polyoxypropylen-Derivate der (Meth)acrylsäure, wie
Triethylenglycol(meth)acrylat,
Tetraethylenglycol(meth)acrylat und
Tetrapropylengylcol(meth)acrylat.

Zu den (Meth)acrylaten bzw. (Meth)acrylamiden gemäß Formel (VI) (Komponente d)gehören unter anderem Amide der (Meth)acrylsäure, wie
N-(3-Dimethylaminopropyl)methacrylamid,
N-(Diethylphosphono)methacrylamid,
1-Methacryloylamido-2-methyl-2-propanol,
N-(3-Dibutylaminopropyl)methacrylamid,
N-t-Butyl-N-(diethylphosphono)methacrylamid,
N,N-bis(2-Diethylaminoethyl)methacrylamid,
4-Methacryloylamido-4-methyl-2-pentanol,

N-(Methoxymethyl)methacrylamid,
N-(2-Hydroxyethyl)methacrylamid,
N-Acetylmethacrylamid,
N-(Dimethylaminoethyl)methacrylamid,
N-Methyl-N-phenylmethacrylamid,
N,N-Diethylmethacrylamid,
N-Methylmethacrylamid,
N,N-Dimethylmethacrylamid,
N-Isopropylmethacrylamid;
Aminoalkylmethacrylate, wie
tris(2-Methacryloxyethyl)amin,
N-Methylformamidoethylmethacrylat,
2-Ureidoethylmethacrylat;
heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon.

Die Komponente e) umfaßt insbesondere ethylenisch ungesättigte Monomere, die sich mit den ethylenisch ungesättigten Esterverbindungen der Formeln (I), (II), (III), (IV) und/oder (VI) copolymerisieren lassen.

Jedoch sind Comonomere zur Polymerisation gemäß der vorliegenden Erfindung besonders geeignet, die der Formel entsprechen:

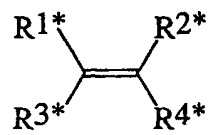

worin $R^{1*}$ und $R^{2*}$ unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise $CF_3$), α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise $CH_2$=CCl-, ist, Cycloalkylgruppen mit 3 bis 8 Kohlenstoffatomen, welche mit 1 bis (2n-1) Halogenatomen, vorzugsweise Chlor, substituiert sein können, wobei die Zahl der Kohlenstoffatome der Cycloalkylgruppe ist; $C(=Y^*)R^{5*}$, $C(=Y^*)NR^{6*}R^{7*}$, $Y^*C(=Y^*)R^{5*}$, $SOR^{5*}$, $SO_2R^{5*}$, $OSO_2R^{5*}$, $NR^{8*}SO_2R^{5*}$, $PR^{5*}_2$, $P(=Y^*)R^{5*}_2$, $Y^*PR^{5*}_2$, $Y^*P(=Y^*)R^{5*}_2$, $NR^{8*}_2$ welche mit einer zusätzlichen $R^{8*}$-, Aryl- oder Heterocyclyl-Gruppe quaternärisiert sein kann, wobei Y* $NR^{8*}$, S oder O, vorzugsweise O sein kann; $R^{5*}$ eine Alkylgruppe mit 1 bis 20 Kohlenstoffatomen, eine Alkylthio mit 1 bis 20 Kohlenstoffatomen, $OR^{15}$ ($R^{15}$ ist Wasserstoff oder ein Alkalimetall), Alkoxy von 1 bis 20 Kohlenstoffatomen, Aryloxy oder Heterocyklyloxy ist; $R^{6*}$ und $R^{7*}$ unabhängig Wasserstoff oder eine Alkylgruppe mit 1 bis 20 Kohlenstoffatomen sind, oder $R^{6*}$ und $R^{7*}$ können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und $R^{8*}$ Wasserstoff, lineare oder verzweigte Alkyl- oder Arylgruppen mit 1 bis 20 Kohlenstoffatomen sind; $R^{3*}$ und $R^{4*}$ unabhängig ausgewählt aus der Gruppe bestehend aus Wasserstoff, Halogen (vorzugsweise Fluor oder Chlor), Alkylgruppen mit 1 bis 6 Kohlenstoffatomen und $COOR^{9*}$, worin $R^{9*}$ Wasserstoff, ein Alkalimetall oder eine Alkylgruppe mit 1 bis 40 Kohlenstoffatomen ist, sind, oder $R^{1*}$ und $R^{3*}$ können zusammen eine Gruppe der Formel $(CH_2)_{n'}$ bilden, welche mit 1 bis 2n' Halogenatomen oder $C_1$ bis $C_4$ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste $R^{1*}$, $R^{2*}$, $R^{3*}$ und $R^{4*}$ Wasserstoff oder Halogen sind.

Die Komponente e) umfaßt insbesondere ethylenisch ungesättigte Monomere, die sich mit den Esterverbindungen der Formel (I) copolymerisieren lassen. Hierzu gehören unter anderem Nitrile der (Meth)acrylsäure und andere stickstoffhaltige Methacrylate, wie
Methacryloylamidoacetonitril,
2-Methacryloyloxyethylmethylcyanamid,
Cyanomethylmethacrylat;
Aryl(meth)acrylate, wie Benzylmethacrylat oder
Phenylmethacrylat, wobei die Arylreste jeweils unsubstituiert oder bis zu vierfach substituiert sein können;

carbonylhaltige Methacrylate, wie
2-Carboxyethylmethacrylat, Carboxymethylmethacrylat,
Oxazolidinylethylmethacrylat,
N-(Methacryloyloxy)formamid,
Acetonylmethacrylat, N-Methacryloylmorpholin,
N-Methacryloyl-2-pyrrolidinon;
Glycoldimethacrylate, wie 1,4-Butandiolmethacrylat, 2-Butoxyethylmethacrylat,
2-Ethoxyethoxymethylmethacrylat,
2-Ethoxyethylmethacrylat,
Methacrylate von Etheralkoholen, wie
Tetrahydrofurfurylmethacrylat,
Vinyloxyethoxyethylmethacrylat,
Methoxyethoxyethylmethacrylat,
1-Butoxypropylmethacrylat,
1-Methyl-(2-vinyloxy)ethylmethacrylat,
Cyclohexyloxymethylmethacrylat,
Methoxymethoxyethylmethacrylat,
Benzyloxymethylmethacrylat,
Furfurylmethacrylat,
2-Butoxyethylmethacrylat,
2-Ethoxyethoxymethylmethacrylat,
2-Ethoxyethylmethacrylat,
Allyloxymethylmethacrylat,
1-Ethoxybutylmethacrylat,
Methoxymethylmethacrylat,
1-Ethoxyethylmethacrylat,
Ethoxymethylmethacrylat;
Methacrylate von halogenierten Alkoholen, wie
2,3-Dibromopropylmethacrylat,
4-Bromophenylmethacrylat,
1,3-Dichloro-2-propylmethacrylat,
2-Bromoethylmethacrylat,
2-Iodoethylmethacrylat,
Chloromethylmethacrylat;
Oxiranylmethacrylate, wie
2,3-Epoxybutylmethacrylat,
3,4-Epoxybutylmethacrylat,
Glycidylmethacrylat;
Phosphor-, Bor- und/oder Silicium-haltige Methacrylate, wie
2-(Dimethylphosphato)propylmethacrylat,
2-(Ethylenphosphito)propylmethacrylat,
Dimethylphosphinomethylmethacrylat,
Dimethylphosphonoethylmethacrylat,
Diethylmethacryloylphosphonat,
Dipropylmethacryloylphosphat;
schwefelhaltige Methacrylate, wie
Ethylsulfinylethylmethacrylat,
4-Thiocyanatobutylmethacrylat,
Ethylsulfonylethylmethacrylat,
Thiocyanatomethylmethacrylat,
Methylsulfinylmethylmethacrylat,
Bis(methacryloyloxyethyl)sulfid;
Trimethacrylate, wie
Trimethyloylpropantrimethacrylat;
Vinylhalogenide, wie beispielsweise Vinylchlorid, Vinylfluorid,
Vinylidenchlorid und Vinylidenfluorid;
Vinylester, wie Vinylacetat;
Styrol, substituierte Styrole mit einem Alkylsubstituenten in der Seitenkette, wie z. B. α-Methylstyrol und α-Ethylstyrol,

substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäure und Maleinsäurederivate, wie beispielsweise Mono- und Diester der Maleinsäure, wobei die Alkoholreste 1 bis 9 Kohlenstoffatome aufweisen, Maleinsäureanhydrid, Methylmaleinsäureanhydrid, Maleinimid, Methylmaleinimid;
Fumarsäure und Fumarsäurederivate, wie beispielsweise Mono- und Diester der Fumarsäure, wobei die Alkoholreste 1 bis 9 Kohlenstoffatome aufweisen;
Diene wie beispielsweise Divinylbenzol.

Neben Styrol sind als Comonomere insbesondere Monomere bevorzugt, die dispergierende Wirkungen haben, wie beispielsweise die zuvor genannten heterocyclischen Vinylverbindungen. Diese Monomere werden des weiteren als dispergierende Monomere bezeichnet.

Die zuvor genannten ethylenisch ungesättigten Monomere können einzeln oder als Mischungen eingesetzt werden. Es ist des weiteren möglich, die Monomerzusammensetzung während der Polymerisation zu variieren, um definierte Strukturen, wie beispielsweise Blockcopolymere, zu erhalten.

In bevorzugten Ausführungsformen des erfindungsgemäßen Verfahrens sind mindestens 70 Gewichtsprozent der ethylenisch ungesättigten Monomere, besonders bevorzugt mehr als 80 Gew.-% der ethylenisch ungesättigten Monomere, bezogen auf da Gesamtgewicht der ethylenisch ungesättigten Monomere, (Meth)acrylate, Maleate und/oder Fumarate mit Alkyl- oder Heteroalkylketten, die mindestens 6 Kohlenstoffatome enthalten.

Die zuvor genannten Monomere werden mittels Initiatoren, die eine übertragbare Atomgruppe aufweisen, polymerisiert. Im allgemeinen lassen sich diese Initiatoren durch die Formel $Y\text{-}(X)_m$ beschreiben, worin Y das Kernmolekül darstellt, von dem angenommen wird, daß es Radikale bildet, X ein übertragbares Atom oder eine übertragbare Atomgruppe repräsentiert und m eine ganze Zahl im Bereich von 1 bis 10 darstellt, abhängig von der Funktionalität der Gruppe Y. Falls m > 1 ist, können die verschiedenen übertragbaren Atomgruppen X eine unterschiedliche Bedeutung haben. Ist die Funktionalität des Initiators > 2, so werden sternförmige Polymere erhalten. Bevorzugte übertragbare Atome bzw. Atomgruppen sind Halogene, wie beispielsweise Cl, Br und/oder J.

Wie zuvor erwähnt, wird von der Gruppe Y angenommen, daß sie Radikale bildet, die als Startmolekül dienen, wobei sich dieses Radikal an die ethylenisch ungesättigten Monomere anlagert. Daher weist die Gruppe Y vorzugsweise Substituenten auf, die Radikale stabilisieren können. Zu diesen Substituenten gehören unter anderem -CN, -COR und $-CO_2R$,
wobei R jeweils ein Alkyl- oder Arylrest darstellt, Aryl- und/oder Heteroaryl-Gruppen.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl, Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein.

Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; armoatische Gruppen, wie Phenyl oder Nahphthyl; Aminogruppen, Ethergruppen, Estergruppen sowie Halogenide.

Zu den aromatischen Resten gehören beispielsweise Phenyl, Xylyl, Toluyl, Naphtyl oder Biphenylyl.

Der Ausdruck "Heteroaryl" kennzeichnet ein heteroaromatisches Ringsystem, worin mindestens eine CH-Gruppe durch N oder zwei benachbarte CH-Gruppen durch S, O oder NH ersetzt sind, wie ein Rest von Thiophen, Furan, Pyrrol, Thiazol, Oxazol, Pyridin, Pyrimidin und Benzo[a]furan, die ebenfalls die zuvor genannten Substituenten aufweisen können.

Ein erfindungsgemäß verwendbarer Initiator kann jede Verbindung sein, die ein oder mehrere Atome oder Atomgruppen aufweist, welche unter den Polymerisationsbedingungen radikalisch übertragbar ist.

Geeignete Initiatoren umfassen jene der Formeln:

$$R^{11}R^{12}R^{13}C\text{-}X$$

$$R^{11}C(=O)\text{-}X$$

$$R^{11}R^{12}R^{13}Si\text{-}X$$

$$R^{11}R^{12}N\text{-}X$$

$$R^{11}N\text{-}X_2$$

$$(R^{11})_nP(O)_m\text{-}X_{3-n}$$

$$(R^{11}O)_nP(O)_m\text{-}X_{3-n} \text{ und}$$

$$(R^{11})(R^{12}O)P(O)_m\text{-}X,$$

worin X ausgewählt ist aus der Gruppe bestehend aus Cl, Br, I, $OR^{10}$, [wobei $R^{10}$ eine Alkylgruppe von 1 bis 20 Kohlenstoffatomen, wobei jedes Wasserstoffatom unabhängig durch ein Halogenid, vorzugsweise Flurid oder Chlorid ersetzt sein kann, Alkenyl von 2 bis 20 Kohlenstoffatomen, vorzugsweise Vinyl, Alkynyl von 2 bis 10 Kohlenstoffatomen vorzugsweise Acetylenyl, Phenyl, welches mit 1 bis 10 Halogenatomen oder Alkylgruppen mit 1 bis 4 Kohlenstoffatomen substituiert sein kann, oder Aralkyl (arylsubstituiertes Alkyl in welchem die Arylgruppe Phenyl oder substituiertes Phenyl und die Alkylgruppe ein Alkyl mit 1 bis 6 Kohlenstoffatomen darstellt, wie beispielsweise Benzyl) bedeutet;] $SR^{14}$, $SeR^{14}$, $OC(=O)R^{14}$, $OP(=O)R^{14}$, $OP(=O)(OR^{14})_2$, $OP(=O)OR^{14}$, $O\text{-}N(R^{14})_2$, $S\text{-}C(=S)N(R^{14})_2$, CN, NC, SCN, CNS, OCN, CNO und $N_3$ darstellt, wobei $R^{14}$ eine Arylgruppe oder eine lineare oder verzweigte Alkylgruppe mit 1 bis 20, vorzugsweise 1 bis 9 Kohlenstoffatomen bedeutet, wobei zwei $R^{14}$-Gruppen, falls vorhanden, zusammen einen 5, 6 oder 7-gliedrigen heterocyclischen Ring bilden können; und

$R^{11}$, $R^{12}$ und $R^{13}$ unabhängig ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, $R^{8*}{}_3Si$, $C(=Y^*)R^{5*}$, $C(=Y^*)NR^{6*}R^{7*}$, wobei $Y^*$, $R^{5*}$, $R^{6*}$ und $R^{7*}$ wie zuvor definiert sind, COCl, OH, (vorzugsweise ist einer der Reste $R^{11}$, $R^{12}$ und $R^{13}$ OH), CN, Alkenyl- oder Alkynylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkylen- oder Alkenylengruppen mit 2 bis 6 Kohlenstoffatomen, welche mit Oxiranyl oder Glycidyl, Aryl, Heterocyclyl, Aralkyl, Aralkenyl (arylsubsituiertes Alkenyl, wobei Aryl wie zuvor definiert ist und Alkenyl Vinyl ist, welches mit ein oder zwei $C_1$ bis $C_6$ Alkylgruppen und/oder Halogenatomen, vorzugsweise mit Chlor substituiert ist) substituiert sind, Alkylgruppen mit 1 bis 6 Kohlenstoffatomen, in welchen ein bis alle der Wasserstoffatome, vorzugsweise eines, durch Halogen substituiert sind, (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkylgruppen mit 1 bis 6 Kohlenstoffatomen, die mit 1 bis 3 Substituenten (vorzugsweise 1) ausgewählt aus der Gruppe bestehend aus $C_1$-$C_4$ Alkoxy, Aryl, Heterocyclyl, $C(=Y^*)R^{5*}$ (wobei $R^{5*}$ wie zuvor definiert ist), $C(=Y^*)NR^{6*}R^{7*}$ (wobei $R^{6*}$ und $R^{7*}$ wie zuvor definiert sind), Oxiranyl und Glycidyl substituiert sind; (vorzugsweise sind nicht mehr als 2 der Reste $R^{11}$, $R^{12}$ und $R^{13}$ Wasserstoff, besonders bevorzugt ist maximal einer der Reste $R^{11}$, $R^{12}$ und $R^{13}$ Wasserstoff); m=0 oder 1; und m=0, 1 oder 2 darstellt.

Zu den besonders bevorzugten Initiatoren gehören Benzylhalogenide, wie p-Chlormethylstyrol, α-Dichlorxylol, α,α-Dichlorxylol, α,α-Dibromxylol und Hexakis(α-brommethyl)benzol, Benzylchlorid, Benzylbromid, 1-Brom-1-phenylethan und 1-Chlor-1-phenylethan;

Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat, Ethyl-2-bromisobutyrat; Tosylhalogenide, wie p-Toluolsulfonylchlorid; Alkylhalogenide, wie Tetrachlormethan, Tribrommethan, 1-Vinylethylchlorid, 1-Vinylethylbromid; und Halogenderivate von Phosphorsäureestern, wie Dimethylphosphorsäurechlorid.

Der Initiator wird im allgemeinen in einer Konzentration im Bereich von $10^{-4}$ mol/L bis 3 mol/L, vorzugsweise im Bereich von $10^{-3}$ mol/L bis $10^{-1}$ mol/L und besonders bevorzugt im Bereich von $5*10^{-2}$ mol/L bis $5*10^{-1}$ mol/L eingesetzt, ohne daß hierdurch eine Beschränkung erfolgen soll. Aus dem Verhältnis Initiator zu Monomer ergibt sich das Molekulargewicht des Polymeren, falls das gesamte Monomer umgesetzt wird. Vorzugsweise liegt dieses Verhältnis

im Bereich von $10^{-4}$ zu 1 bis 0,5 zu 1, besonders bevorzugt im Bereich von $1*10^{-3}$ zu 1 bis $5*10^{-2}$ zu 1.

Die Polymerisation findet in Gegenwart von Liganden statt, die mit dem oder den metallischen Katalysatoren eine Koordinationsverbindung bilden können. Diese Liganden dienen unter anderem zur Erhöhung der Löslichkeit der Übergangsmetallverbindung. Eine weitere wichtige Funktion der Liganden besteht darin, daß die Bildung von stabilen Organometallverbindungen vermieden wird. Dies ist besonders wichtig, da diese stabilen Verbindungen bei den gewähren Reaktionsbedingungen nicht polymerisieren würden. Des weiteren wird angenommen, daß die Liganden die Abstraktion der übertragbaren Atomgruppe erleichtern.

Diese Liganden sind an sich bekannt und beispielsweise in WO 97/18247, WO 98/40415 beschrieben. Diese Verbindungen weisen im allgemeinen ein oder mehrere Stickstoff-, Sauerstoff-, Phosphor- und/oder Schwefelatome auf, über die das Metallatom gebunden werden kann. Viele dieser Liganden lassen sich im allgemeinen durch die Formel $R^{16}$-Z-($R^{18}$-Z)$_m$-$R^{17}$ darstellen, worin $R^{16}$ und $R^{17}$ unabhängig H, $C_1$ bis $C_{20}$ Alkyl, Aryl, Heterocyclyl bedeuten, die ggf. substituiert sein können. Zu diesen Substituenten zählen u. a. Alkoxyreste und die Alkylaminoreste. $R^{16}$ und $R^{17}$ können ggf. einen gesättigten, ungesättigten oder heterocyclischen Ring bilden. Z bedeutet O, S, NH, $NR^{19}$ oder $PR^{19}$, wobei $R^{19}$ die gleiche Bedeutung wie $R^{16}$ hat. $R^{18}$ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen- oder Butylengruppe. Die Bedeutung von Alkyl und Aryl wurde zuvor dargelegt. Heterocyclylreste sind cyclische Reste mit 4 bis 12 Kohlenstoffatome, bei denen ein oder mehrere der $CH_2$-Gruppen des Ringes durch Heteroatomgruppen, wie O, S, NH, und/oder NR, ersetzt sind, wobei der Rest R, die gleich Bedeutung hat, wie $R^{16}$ hat.

Eine weitere Gruppe von geeigneten Liganden läßt sich durch die Forme

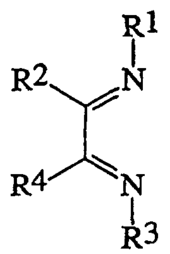

(VII)

darstellen, worin $R^1$, $R^2$, $R^3$ und $R^4$ unabhängig H, $C_1$ bis $C_{20}$ Alkyl-, Aryl-, Heterocyclyl- und/oder Heteroarylrest bedeuten, wobei die Reste $R^1$ und $R^2$ bzw. $R^3$ und $R^4$ zusammen einen gesättigten oder ungesättigten Ring bilden können.

Bevorzugte Liganden sind hierbei Chelatliganden, die N-Atome enthalten.

Zu den bevorzugten Liganden gehören unter anderem Triphenylphosphan, 2,2-Bipyridin, Alkyl-2,2-bipyridin, wie 4,4-Di-(5-nonyl)-2,2-bipyridin, 4,4-Di-(5-heptyl)-2,2 Bipyridin, Tris(2-aminoethyl)amin (TREN), N,N,N',N',N"-Pentamethyldiethylentriamin, 1,1,4,7,10,10-Hexamethyltriethlyentetramin und/oder Tetramethylethylendiamin. Weitere bevorzugte Liganden sind beispielsweise in WO 97/47661 beschrieben. Die Liganden können einzeln oder als Mischung eingesetzt werden.

Diese Liganden können in situ mit Kupfermetall oder den Kupferverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall Kupfer ist abhängig von der Zähnigkeit des Liganden und der Koordinationszahl des Kupfers. Im allgemeinen liegt das molare Verhältnis im Bereich 100:1 bis 0,1:1, zweckmäßig 10:1 bis 0,1:1, vorzugsweise 6:1 bis 0,1:1 und besonders bevorzugt 3:1 bis 0,5:1, ohne daß hierdurch eine Beschränkung erfolgen soll.

Überraschenderweise hat sich im Rahmen der Erfindung herausgestellt, daß höhere Ligandenkonzentrationen bei den relativ niedrigen Konzentrationen an oxidiertem Kupfer der Oxidationsstufen (I) und (II), wie sie bei den erfindungsgemäß bevorzugten niedrigen Katalysator-Mengen üblich sind, zu ganz außergewöhnlich guten Ergebnissen führen. Besonders zweckmäßige Ergebnisse stellten sich bei Verwendung von Kupferhalogeniden als Quelle für Cu (I) und Cu (II) ein. Eine besondere Ausführungsform der Erfindung bezieht sich insofern auf ein Verfahren, bei welchem das Gewichtsverhältnis von CuX zu Ligand im Bereich zwischen 1:5 und 1:20, besonders zweckmäßig im Bereich zwischen 1:7 und 1:15 ist. CuX schließt hierbei unter anderem bevorzugt Kupferhalogenide wie CuCl oder CuBr ein.

Je nach erwünschter Polymerlösung werden die Monomere, die Kupferkatalysatoren, die Liganden und die Initiatoren ausgewählt. Es wird angenommen, daß eine hohe Geschwindigkeitskonstante der Reaktion zwischen dem Kupfer-Ligand-Komplex und der übertragbaren Atomgruppe wesentlich für eine enge Molekulargewichtsverteilung ist. Ist die Geschwindigkeitskonstante dieser Reaktion zu gering, so wird die Konzentration an Radikalen zu hoch, so daß

die typischen Abbruchreaktionen auftreten, die für eine breite Molekulargewichtsverteilung verantwortlich sind. Die Austauschrate ist beispielsweise abhängig von der übertragbaren Atomgruppe, dem Übergangsmetall und den Liganden.

Das Verfahren der vorliegenden Erfindung kann ohne Lösungsmittel als Polymerisation in Masse durchgeführt werden. Die Polymerisation in "bulk" führt bereits zu sehr guten Ergebnissen. In bevorzugten Ausführungsformen des Verfahrens werden unpolare Lösungsmittel eingesetzt. Allerdings darf die Konzentration an Kupfer der Oxidationsstufen (I) und (II) nicht die zuvor genannten Werte übersteigen.

Zu den unpolaren Lösungsmitteln gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle und synthetische Öle sowie Mischungen hiervon. Von diesen sind Mineralöle ganz besonders bevorzugt.

Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphthenischer Anteil für Cycloalkane stehen. Darüber hinaus weise Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen polare Eigenschaften zugesprochen werden. Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 30 Gew.-%. Gemäß einem interessanten Aspekt umfaßt Mineralöl hauptsächlich naphthenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:

n-Alkane mit ca. 18 bis 31 C-Atome:
0,7 - 1,0 %,
gering verzweigte Alkane mit 18 bis 31 C-Atome:
1,0-8,0%,
Aromaten mit 14 bis 32 C-Atomen:
0,4 - 10,7 %,
Iso- und Cyclo-Alkane mit 20 bis 32 C-Atomen:
60,7- 82,4 %,
polare Verbindungen:
0,1 - 0,8 %,
Verlust:
6,9 - 19,4 %.

Wertvolle Hinweise hinsichtlich der Analyse von Mineralölen sowie eine Aufzählung von Mineralölen, die eine abweichende Zusammensetzung aufweisen, finden sich beispielsweise in Ullmanns Encyclopedia of Industrial Chemistry, 5$^{th}$ Edition on CD-ROM, 1997, Stichwort "lubricants and related products".

Synthetische Öle sind unter anderem organische Ester, organische Ether, wie Siliconöle, und synthetische Kohlenwasserstoffe, insbesondere Polyolefine. Sie sind meist etwas teurer als die mineralischen Öle, haben aber Vorteile hinsichtlich ihrer Leistungsfähigkeit. Zur Verdeutlichung soll noch auf die 5 API-Klassen der Grundöltypen (API: American Petroleum Institute) hingewiesen werden, wobei diese Grundöle besonders bevorzugt als Lösungsmittel eingesetzt werden können.

Diese Lösungsmittel werden vor oder während der Filtration, vorzugsweise in einer Menge von 1 bis 99 Gew.-%, besonders bevorzugt von 5 bis 95 Gew.-% und ganz besonders bevorzugt von 10 bis 60 Gew.-%, bezogen auf das Gesamtgewicht der Mischung, eingesetzt.

Die Polymerisation kann bei Normaldruck, Unter- od. Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C, ohne daß hierdurch eine Beschränkung erfolgen soll.

Mit Hilfe des vorliegenden Verfahrens können Polymere mit einer vorgegebenen Architektur auf einfache Weise erhalten werden. Diese Möglichkeiten ergeben sich aus dem "lebenden" Charakter des Polymerisationsverfahrens. Zu diesen Strukturen gehören unter anderem Blockcopolymere, Gradientencopolymere, Sternpolymere, hochverzweigte Polymere, Polymere mit reaktiven Endgruppen und Pfropfcopolymere.

Von besonderem Interesse für das erfindungsgemäße Verfahren kann es sein, daß man in der Polymerzusammensetzung ein Copolymer mit einem nicht-statistischen Aufbau, vorzugsweise ein Diblock-, Triblock- oder ein Gradientenpolymer herstellt.

Die im Rahmen der Erfindung hergestellten Polymere weisen im allgemeinen ein Molekulargewicht im Bereich von 1 000 bis 1 000 000 g/mol, vorzugsweise im Bereich von $10*10^3$ bis $500*10^3$ g/mol, zweckmäßig $10*10^3$ bis $300*10^3$ g/mol und besonders bevorzugt im Bereich von $50*10^3$ bis $300*10^3$ g/mol auf, ohne daß hierdurch eine Beschränkung erfolgen soll. Diese Werte beziehen sich auf das Gewichtsmittel des Molekulargewichts der polydispersen Polymere in der Zusammensetzung.

Eine besonders zweckmäßige Variante des Verfahrens gemäß der Erfindung ist dadurch gekennzeichnet, daß man Polymere mit einem Gewichtsmittel des Molekulargewichts ≥ 7 000 g/mol, herstellt.

Der besondere Vorteil von ATRP im Vergleich zur herkömmlichen radikalischen Polymerisationsverfahren besteht darin, daß Polymere mit enger Molekulargewichtsverteilung hergestellt werden können. Ohne daß hierdurch eine Beschränkung erfolgen soll, weisen Polymere, die nach dem erfindungsgemäßen Verfahren erhalten wurden, eine Polydispersität, die durch $M_w/M_n$ gegeben ist, im Bereich von 1 bis 12, vorzugsweise 1 bis 4,5, besonders bevorzugt 1 bis 3 und ganz besonders bevorzugt 1,05 bis 2 auf.

Die geringen Mengen an Kupfer der Oxidationsstufen (I) und (II), wie sie erfindungsgemäß typisch sind, stören im allgemeinen in den angestrebten Anwendungen nicht, so daß keine Abtrennung des Katalysators durchgeführt werden muß.

Für besondere Anwendungen, in denen selbst die geringen erfindungsgemäßen Mengen stören sollten, kann gelöstes Kupfer durch ein Fest-Flüssig-Trennverfahren abgetrennt werden. Hierzu gehören beispielsweise die Chromatographie, die Zentrifugation und die Filtration.

Vorzugsweise wird der Katalysator durch Filtration entfernt. Dazu wird nach der Polymerisation die Oxidationsstufe des Übergangsmetalls erhöht. Durch die Oxidation des Übergangsmetalls nimmt die Löslichkeit des Katalysators, je nach Wahl des oder der Liganden ab, so daß das Übergangsmetall durch Filtration abgetrennt werden kann, falls ein Lösungsmittel, insbesondere ein Mineralöl vorhanden ist, dessen Dielektrizitätskonstante ≤ 4, vorzugsweise ≤ 3 und besonders bevorzugt ≤ 2,5 ist.

Die Oxidation des Übergangsmetalls kann mit bekannten Oxidationsmitteln wie beispielsweise Sauerstoff, $H_2O_2$ oder Ozon durchgeführt werden. Vorzugsweise wird der Katalysator mit Luftsauerstoff oxidiert. Es ist keine vollständige Oxidation des Übergangsmetalls oder der Übergangsmetallverbindung notwendig. In vielen Fällen genügt ein Kontakt der Zusammensetzung mit Luftsauerstoff von wenigen Minuten, um eine ausreichende Ausfällung der Übergangsmetallverbindung zu gewährleisten.

Das Filtrieren ist an sich bekannt und beispielsweise in Ullmann's Encyclopedia of Industrial Chemistry, Fifth Edition, Stichwort "Filtration", beschrieben. Vorzugsweise wird die Zusammensetzung bei einer Druckdifferenz im Bereich von 0,1 bis 50 bar, vorzugsweise 1 bis 10 bar und besonders bevorzugt 1,5 bis 2,5 bar mit einem Filter einer Siebgröße im Bereich von 0,01 µm bis 1 mm, vorzugsweise 1 µm bis 100 µm und besonders bevorzugt 10 µm bis 100 µm gereinigt. Diese Angaben dienen als Anhaltspunkte, da die Reinigung auch von der Viskosität des Lösungsmittels und der Korngröße des Niederschlags abhängig ist.

Die Filtration findet in einem ähnlichen Temperaturbereich wie die Polymerisation statt, wobei der obere Bereich von der Stabilität des Polymeren abhängig ist. Die untere Grenze ergibt sich aus der Viskosität der Lösung.

Die so hergestellte Poly(meth)acrylatzusammensetzung kann ohne weitere Reinigung beispielsweise als Additiv in Schmierölen verwendet werden. Darüber hinaus kann aus der Zusammensetzung das Polymer isoliert werden. Hierzu können die Polymere durch Fällung aus der Zusammensetzung abgeschieden werden.

Nachfolgend wird die Erfindung durch Beispiele und Vergleichsbeispiele eingehender erläutert, ohne daß die Erfindung auf diese Beispiele beschränkt werden soll.

I) Angaben zu den Ausgangsstoffen und Methoden:

I.1) Edukte

Das verwendete DPMA (Dodecylpentadecylmethacrylat) wurde unter Berücksichtigung eines Reinheitsgrades von 98 % eingewogen. CuBr, $Cu_2O$ (Korngröße 5 µm), Kupferpulver, TsCl (p-Toluolsulfonylchlorid), EBiB (Ethyl-2-bromoisobutyrat), PMDETA (Pentamethyldiethylentriamin) sowie 2,2,4-Trimethylpentan wurden von Aldrich bezogen und ebenso wie MMA (Methylmethacrylat), BMA (n-Butylmethacrylat) und DMAPMAm (Dimethylaminopropylmethacrylamid) (alle Rohm&Haas) unter Annahme eines 100%-igen Reinheitsgrades eingewogen. Bei dem verwendeten naphthenischen Mineralöl handelte es sich um ein Öl der Firma Calumet (Viskosität: 37 SUS bei 100°F). Das verwendete paraffinische Öl war ein 100N-Öl des Herstellers Petro Canada. Kupferfolie (Aldrich; Dicke: 0,025 mm) wurde in 1 $cm^2$ grossen Stücken eingesetzt. Die Dicke des benutzten Kupferbleches (Alfa Aesar) betrug 1 mm. Das verwendete Kupfergeflecht (Alfa Aesar) war ein 50 mesh-Netz und bestand aus Kupferdrähten mit einer Dicke von 0,23 mm. Zur Umrechnung der nominellen Fläche des jeweils verwendeten Kupfernetzes in die reelle Kupferoberfläche wurde folgende Umrechnungsformel verwendet:

$$\frac{S}{A} = \frac{N\pi D[D/2+L]}{LW} = 2.86$$

mit

- $A$ = Nominelle Oberfläche in $cm^2$
- $D$ = Durchmesser Kupferdraht, cm
- $L$ = Länge, cm
- $N$ = Zahl der Drähte in der nominellen Fläche (entspr. 2 mal mesh-Größe)
- $S$ = Reelle Oberfläche, $cm^2$
- $W$ = Breite, cm

I.2) Bestimmung des Restmonomergehaltes in den Polymerisationsansätzen:

Die Restmonomergehalte für Versuche in denen als Monomere MMA (Methylmethacrylat) bzw. BMA (n-Butylmethacrylat) eingesetzt wurden, wurden in allen Fällen per Gaschromatographie bestimmt. Hierbei wurden die Proben direkt mittels Headspace-GC/MS bei einer Temperatur von 130°C analysiert. Da Poly-DPMA unter diesen Bedingungen zur Depolymerisation neigt, wurden Poly-DPMA-Proben in Form 10%-iger THF-Lösungen in Volumina von 200 µl einer Gelpermeationsauftrennung unterworfen und die DPMA haltigen Fraktionen mittels einer beschleunigten Gaschromatographiemethode mit Flammenionisationsdetektionsmodus bestimmt. Diese Methode wurde mittels 0.1%-iger DPMA-Proben kalibriert. Das Headspace-GC-Systhem wurde unter Zuhilfenahme 1 %-iger MMA- und BMA-Proben geeicht. Restgehalte von DMAPMAm (Dimethylaminopropylmethacrylamid) wurden mittels direkter GC bei einer Temperatur von 150°C erhalten. Die im Endprodukt gefundenen DMAPMAm/DPMA-Gewichtsverhältnisse entsprachen den in den Ausgangslösungen enthaltenen relativen Verhältnissen.

I.3) Bestimmung des Kupfergehaltes in der Polymerzusammensetzung

I.3.1) Kupfer(I)salze

Bei löslichen Kupfersalzen (beispielsweise CuCl oder CuBr) wurde der Kupfergehalt in Lösung aufgrund der verwendeten Kupfer(I)salz-Einwaage unter der Annahme errechnet, daß das Kupfer(I)salz während der Polymerisationsreaktion vollständig gelöst vorlag. Wenn nicht oder schwer lösliche Anteile vorhanden waren, liegt die tatsächliche Kupferkonzentration in Lösung unterhalb der aufgrund der Einwaage theoretisch möglichen maximalen Konzentration.

I.3.2) Bei schwer löslichen Kupferquellen (elementares Kupfer in Pulver-, Netz-, Geflecht-, Sieb- oder Plättchenform) wurde die ICP-Spektroskopie nach Beendigung der Polymerisationsreaktion zur Bestimmung des Kupfergehaltes in Lösung herangezogen. Hierbei wurde folgendermaßer vorangegangen:

Ca. 2 g Probe des auspolymersierten Reaktionsansatzes wurden in einen Kolben eingewogen, mit 10ml Schwefelsäure vor Aufschlußbeginn versetzt und dann mit einem offenen Mikrowellenaufschluß unter Zusatz von Salpetersäure und Wasserstoffperoxid bei maximal 250°C aufgeschlossen. Die abgekühlte, aufgeschlossene Lösung wird mit Millipor-Wasser quantitativ in einen 50 ml-Meßkolben übergespült, bis zur Eichmarke aufgefüllt und als Meßlösung

mit einem ICP-Spektrometer (Atomemissionsspektrometer) zur Ermittlung des Kupfergehaltes gemessen. Es wird ein ICP-Gerät der Firma Jobin Yvon, Typ JY 38 Plus, verwendet. Das Kupfer wird bei einer Wellenlänge von 324,754 nm bestimmt. Die Messung erfolgt mit dem Program W1. Folgende Kalibrierstandards werden eingesetzt: Pro Standard werden in einem 50 ml Meßkolben ca. 30 ml Wasser vorgelegt und vorsichtig mit 7-8 ml Schwefelsäure versetzt; nach dem Abkühlen werden die jeweiligen Mengen an Kupferstandard dazu pipettiert und mit Wasser bis zur Eichmarke aufgefüllt. Konzentrationen der Standards (mgCu/l): 0; 0,5; 1,0; 2,0 und 4,0. Im Ergebnis erhält man nach dieser Methode den Gehalt an während der Polymerisationsreaktion in Lösung gegangenem (oxidiertem) und damit gelöstem Kupfer zu Ende der Polymerisationsreaktion. Da Kupfer während der ATRP nicht verbraucht wird, entspricht die Konzentration am Ende der Polymerisationsreaktion der tatsächlichen maximalen Konzentration an Kupfer mit der Oxidationsstufe (I) und (II).

II. Ausführung der Beispiele und Vergleichsbeispiele

Vergleichsbeispiel 1 (VB1):

75 g (0.75 mol) MMA in 175 g Toluol werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 22 mg (0.15 mmol) feinpulvrigem $Cu_2O$ werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 40.5 % erhalten und wies eine Polydispersität von 1.21 sowie einen $M_n$-Wert von 15100 auf.

Vergleichsbeispiel 2 (VB2):

106.5 g (0.75 mol) BMA in 143.5 g Toluol werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 22 mg (0.15 mmol) feinpulvrigem $Cu_2O$ werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 39.7 % erhalten und wies eine Polydispersität von 1.11 sowie einen $M_n$-Wert von 15500 auf.

Beispiel 1 (B1):

209.95 g (0.75 mol) DPMA in 44.25 g Toluol werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 22 mg (0.15 mmol) feinpulvrigem $Cu_2O$ werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 91.6 % erhalten und wies eine Polydispersität von 1.27 sowie einen $M_n$-Wert von 47700 auf.

Vergleichsbeispiel 3 (VB3):

75 g (0.75 mol) MMA in 175 g Toluol werden in einem mit Stickstoff durchfluteten 500 ml Vierhalskolben, ausgestattet mit Säbelrührer, Rückflußkühler sowie Innenthermometer, vorgelegt. 104 mg (0.6 mmol) PMDETA, gefolgt von 43 mg (0.3 mmol) CuBr werden zugegeben, wonach das Reaktionsgemisch von Raumtemperatur auf 95°C aufgewärmt wird. Sobald die Lösung die gewünschte Temperatur erreicht hat, werden 0.58 g (3 mmol) EBiB zugegeben und das Reaktionsgemisch bei 95°C für 9 h gerührt. Das hiernach erhaltene Produkt wurde in einer Ausbeute von 22 % erhalten.

Vergleichsbeispiel 4 (VB4):

106.5 g (0.75 mol) BMA in 143.5 g Toluol werden in einem mit Stickstoff durchfluteten 500 ml Vierhalskolben, ausgestattet mit Säbelrührer, Rückflußkühler sowie Innenthermometer, vorgelegt. 104 mg (0.6 mmol) PMDETA, gefolgt von 43 mg (0.3 mmol) CuBr werden zugegeben, wonach das Reaktionsgemisch von Raumtemperatur auf 95°C aufgewärmt wird. Sobald die Lösung die gewünschte Temperatur erreicht hat, werden 0.58 g (3 mmol) EBiB zugegeben und das Reaktionsgemisch bei 95°C für 9 h gerührt. Das hiernach erhaltene Produkt wurde in einer Ausbeute von 43.20 % erhalten.

Beispiel 2 (B2):

209.95 g (0.75 mol) DPMA in 44.25 g Toluol werden in einem mit Stickstoff durchfluteten 500 ml Vierhalskolben, ausgestattet mit Säbelrührer, Rückflußkühler sowie Innenthermometer, vorgelegt. 104 mg (0.6 mmol) PMDETA, gefolgt von 43 mg (0.3 mmol) CuBr werden zugegeben, wonach das Reaktionsgemisch von Raumtemperatur auf 95°C aufgewärmt wird. Sobald die Lösung die gewünschte Temperatur erreicht hat, werden 0.58 g (3 mmol) EBiB zugegeben und das Reaktionsgemisch bei 95°C für 9 h gerührt. Das hiernach erhaltene Produkt wurde in einer Ausbeute von 95.70 % erhalten und wies eine Polydispersität von 1.27 sowie einen $M_n$-Wert von 54300 auf. Nach Entnahme des Reaktionsproduktes blieben deutlich sichtbare, feste Katalysatorrückstände am Kolbenboden zurück.

Vergleichsbeispiel 5 (VB5):

75 g (0.75 mol) MMA in 175 g Toluol werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 20 mg Kupferpulver werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 48.7 % erhalten.

Vergleichsbeispiel 6 (VB6):

106.5 g (0.75 mol) BMA in 143.5 g Toluol werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 20 mg Kupferpulver werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 84 % erhalten.

Beispiel 3 (B3):

209.95 g (0.75 mol) DPMA in 44.25 g Toluol werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 20 mg Kupferpulver werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 97.4 % erhalten.

Vergleichsbeispiel 7 (VB7):

75 g (0.75 mol) MMA in 175 g Toluol werden in einem mit Stickstoff durchfluteten 500 ml Vierhalskolben, ausgestattet mit Säbelrührer, Rückflußkühler sowie Innenthermometer, vorgelegt. 1.5 g Kupferfolie (Aldrich, Dicke: 0,025 mm) in 1 $cm^2$ großen Stücken gefolgt von 52 mg (0.3 mmol) PMDETA werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 87,00 % erhalten. Die mittels GPC gemessene Polydispersität betrug 1.30, der $M_n$-Wert 27800.

Vergleichsbeispiel 8 (VB8):

106.5 g (0.75 mol) BMA in 143.5 g Toluol werden in einem mit Stickstoff durchfluteten 500 ml Vierhalskolben, ausgestattet mit Säbelrührer, Rückflußkühler sowie Innenthermometer, vorgelegt. 1.5 g Kupferfolie (Aldrich, Dicke: 0,025 mm) in 1 $cm^2$ großen Stücken gefolgt von 52 mg (0.3 mmol) PMDETA werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 85 % erhalten. Die mittels GPC gemessene Polydispersität betrug 1.32, der $M_n$-Wert 33600.

Beispiel 4 (B4):

209.95 g (0.75 mol) DPMA in 44.25 g Toluol werden in einem mit Stickstoff durchfluteten 500 ml Vierhalskolben, ausgestattet mit Säbelrührer, Rückflußkühler sowie Innenthermometer, vorgelegt. 1.5 g Kupferfolie (Aldrich, Dicke: 0,025 mm) in 1 $cm^2$ großen Stücken gefolgt von 52 mg (0.3 mmol) PMDETA werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 99.6 % erhalten. Die mittels GPC gemessene Polydispersität betrug 1.25, der $M_n$-Wert 65800.

Vergleichsbeispiel 9 (VB9):

75 g (0.75 mol) MMA in 175 g 2,2,4-Trimethylpentan werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 22 mg (0.15 mmol) feinpulvrigem $Cu_2O$ werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 34 % erhalten.

Vergleichsbeispiel 10 (VB10):

106.5 g (0.75 mol) BMA in 143.5 g 2,2,4-Trimethylpentan werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 22 mg (0.15 mmol) feinpulvrigem $Cu_2O$ werden zugegeben, wonach das Reaktionsgemisch von Raumtemperatur auf 95°C aufgewärmt wird: Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 38.9 % erhalten.

Beispiel 5 (B5):

209.95 g (0.75 mol) DPMA in 44.25 g 2,2,4-Trimethylpentan werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 22 mg (0.15 mmol) feinpulvrigem $Cu_2O$ werden zugegeben, wonach das Reaktionsgemisch von Raumtemperatu auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 67.1 % erhalten.

Vergleichsbeispiel 11 (VB11):

106.5 g (0.75 mol) BMA in 143.5 g eines naphthenischen Öles (Calumet) werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 22 mg (0.15 mmol) feinpulvrigem $Cu_2O$ werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 54.2 % erhalten und wies eine Polydispersität von 1.18 sowie einen $M_n$-Wert von 18900 auf.

Beispiel 6 (B6):

209.95 g (0.75 mol) DPMA in 44.25 g eines naphthenischen Grundöles (Calumet) werden in einem mit Stickstoff durchfluteten 500 ml Vierhalskolben, ausgestattet mit Säbelrührer, Rückflußkühler sowie Innenthermometer, vorgelegt. 52 mg (0.3 mmol) PMDETA, gefolgt von 22 mg (0.15 mmol) feinpulvrigem $Cu_2O$ werden zugegeben, wonach das Reaktionsgemisch von Raumtemperatur auf 95°C aufgewärmt wird. Sobald die Lösung die gewünschte Temperatur erreicht hat, werden 0.57 g (3 mmol) TsCl zugegeben und das Reaktionsgemisch bei 95°C für 9 h gerührt. Das hiernach erhaltene Produkt wurde in einer Ausbeute von 98.4 % erhalten und wies eine Polydispersität von 1.33 sowie einen $M_n$-Wert von 42600 auf.

Vergleichsbeispiel 12 (VB12):

75 g (0.75 mol) MMA in 175 g Toluol werden in einem mit Stickstoff durchfluteten 500 ml Vierhalskolben, ausgestattet mit Säbelrührer, Rückflußkühler sowie Innenthermometer, vorgelegt. 1.5 g Kupferfolie (Aldrich, Dicke: 0,025 mm) in 1 $cm^2$ großen Stücken gefolgt von 900 mg (4.72 mmol) PMDETA werden zugegeben, wonach das Reaktionsgemisch von Raumtemperatur auf 95°C aufgewärmt wird. Sobald die Lösung die gewünschte Temperatur erreicht hat, werden 0.18 g (0.94 mmol) TsCl zugegeben und das Reaktionsgemisch bei 95°C für 15 h gerührt. Das hiernach erhaltene Produkt wies Polydispersität von 2.26 sowie einen $M_n$-Wert von 69800 auf.

Vergleichsbeispiel 13 (VB13):

106.5 g (0.75 mol) BMA in 143.5 g Toluol werden in einem mit Stickstoff durchfluteten 500 ml Vierhalskolben, ausgestattet mit Säbelrührer, Rückflußkühler sowie Innenthermometer, vorgelegt. 1.5 g Kupferfolie (Aldrich, Dicke: 0,025 mm) in 1 $cm^2$ großen Stücken gefolgt von 900 mg (4.72 mmol) PMDETA werden zugegeben, wonach das Reaktionsgemisch von Raumtemperatur auf 95°C aufgewärmt wird. Sobald die Lösung die gewünschte Temperatur erreicht hat, werden 0.18 g (0.94 mmol) TsCl zugegeben und das Reaktionsgemisch bei 95°C für 15 h gerührt. Das hiernach erhaltene Produkt wies Polydispersität von 1.78 sowie einen $M_n$. Wert von 112000 auf.

Beispiel 7 (B7):

Eine Mischung aus 212.5 g DPMA, 37.5 g MMA und 51.6 g eines paraffinischen Mineralöles (Petro Canada) wird in einem mit Stickstoff durchfluteten 500 ml Vierhalskolben, ausgestattet mit Säbelrührer, Rückflußkühler sowie Innenthermometer, vorgelegt. 1.5 g Kupferfolie (Aldrich, Dicke: 0,025 mm) in 1 $cm^2$ großen Stücken, gefolgt von 900 mg (4.72 mmol) PMDETA werden zugegeben, wonach das Reaktionsgemisch von Raumtemperatur auf 95°C aufgewärmt wird. Sobald die Lösung die gewünschte Temperatur erreicht hat, werden 0.18 g (0.94 mmol) TsCl zugegeben und das Reaktionsgemisch bei 95°C für 15 h gerührt. Das hiernach erhaltene Produkt wies Polydispersität von 1.26 sowie einen $M_n$-Wert von 188000 auf.

Beispiel 8 (B8):

Eine Mischung aus 212.5 g DPMA, 37.5 g MMA und 51.6 g eines paraffinischen Mineralöles (Petro Canada) wird in einem mit Stickstoff durchfluteten 500 ml Vierhalskolben, ausgestattet mit Säbelrührer, Rückflußkühler sowie Innenthermometer, vorgelegt. 1.5 g Kupferfolie (Aldrich, Dicke: 0,025 mm) in 1 $cm^2$ großen Stücken, gefolgt von 500 mg (2.88 mmol) PMDETA werden zugegeben, wonach das Reaktionsgemisch von Raumtemperatur auf 95°C aufgewärmt wird. Sobald die Lösung die gewünschte Temperatur erreicht hat, werden 0.25 g (1.31 mmol) TsCl zugegeben und das Reaktionsgemisch bei 95°C für 13 h gerührt. Das hiernach erhaltene Produkt wies Polydispersität von 1.21 sowie einen $M_n$. Wert von 142000 auf.

Beispiel 9 (B9):

Eine Mischung aus 6375 g DPMA und 1142.13 g MMA wird in einem mit Stickstoff durchfluteten 20 l Polymerisationskessel, ausgestattet mit einem wassergekühlten Innengewinde, an welches ein 101.21 g schweres Kupfergeflecht (Alfa Aesar; Lotnummer: J26j18) justiert wurde, vorgelegt. Dann werden 20 g (0.115 mol) PMDETA zugegeben und das Reaktionsgemisch von Raumtemperatur auf 95°C aufgewärmt. Sobald die Lösung die gewünschte Temperatur erreicht hat, werden 122.7 g (0.629 mol) EBiB zugegeben und das Reaktionsgemisch bei 95°C weitergerührt. Nach 3 Stunden erhält man ein Produkt in 98,7%-iger Ausbeute, welches einen Polydispersitätsindex von 1.10 sowie einen $M_n$-Wert von 15100 aufweist. Der entleerte Reaktionskessel enthielt keine sichtbaren Ablagerungen fester Katalysatorrückstände.

Beispiel 10 (B10):

Eine Mischung aus 6375 g DPMA und 1142.13 g MMA wird in einem mit Stickstoff durchfluteten 20 l Polymerisationskessel, ausgestattet mit einem wassergekühlten Innengewinde, an welches ein 49.89 g schweres Kupfergeflecht (Alfa Aesar; Lotnummer: J26j18; wiederverwendetes Material aus Beispiel 9) justiert wurde, vorgelegt. Dann werden 20 g (0.115 mol) PMDETA zugegeben und das Reaktionsgemisch von Raumtemperatur auf 95°C aufgewärmt. Sobald die Lösung die gewünschte Temperatur erreicht hat, werden 122.7 g (0.629 mol) EBiB zugegeben und das Reaktionsgemisch bei 95°C weitergerührt. Nach 4 Stunden erhält man ein Produkt in 98,8%-iger Ausbeute, welches einen Polydispersitätsindex von 1.11 sowie einen $M_n$-Wert von 15700 aufweist. Der entleerte Reaktionskessel enthielt

keine sichtbaren Ablagerungen fester Katalysatorrückstände.

Beispiel 11 (B11):

Eine Mischung aus 6375 g DPMA, 1142.13 g MMA und 1500 g eines 100N-Öles (100N, paraffinisch, Petro Canada) wird in einem mit Stickstoff durchfluteten 20 l Polymerisationskessel, ausgestattet mit einem wassergekühlten Innengewinde, an welches ein 101.21 g schweres Kupfergeflecht (Alfa Aesar; Lotnummer: J26j18) justiert wurde, vorgelegt. Dann werden 20 g (0.115 mol) PMDETA zugegeben und das Reaktionsgemisch von Raumtemperatur auf 95°C aufgewärmt. Sobald die Lösung die gewünschte Temperatur erreicht hat, werden 50 g (0.288 mol) EBiB zugegeben und das Reaktionsgemisch bei 95°C weitergerührt. Nach 6 Stunden erhält man ein Produkt in 93%-iger Ausbeute, welches einen Polydispersitätsindex von 1.26 sowie einen $M_n$-Wert von 29400 aufweist. Der entleerte Reaktionskessel enthielt keine sichtbaren Ablagerungen fester Katalysatorrückstände.

Beispiel 12 (B12):

Eine Mischung aus 6375 g DPMA, 1142.13 g MMA und 1500 g eines 100N-Öles (100N, paraffinisch, Petro Canada) wird in einem mit Stickstoff durchfluteten 20 l Polymerisationskessel, ausgestattet mit einem wassergekühlten Innengewinde, an welches ein 50.58 g schweres Kupfergeflecht (Alfa Aesar; Lotnummer: J26j18; wiederverwendetes Material aus Beispiel 11) justiert wurde, vorgelegt. Dann werden 20 g (0.115 mol) PMDETA zugegeben und das Reaktionsgemisch von Raumtemperatur auf 95°C aufgewärmt. Sobald die Lösung die gewünschte Temperatur erreicht hat, werden 50 g (0.288 mol) EBiB zugegeben und das Reaktionsgemisch bei 95°C weitergerührt. Nach 6 Stunden erhält man ein Produkt in 82,6%-iger Ausbeute, welches einen Polydispersitätsindex von 1.48 sowie einen $M_n$-Wert von 34100 aufweist. Der entleerte Reaktionskessel enthielt keine sichtbaren Ablagerungen fester Katalysatorrückstände.

Beispiel 13 (B13):

Eine Mischung aus 6375 g DPMA, 1142.13 g MMA und 1500 g eines 100N-Öles (100N, paraffinisch, Petro Canada) wird in einem mit Stickstoff durchfluteten 20 l Polymerisationskessel, ausgestattet mit einem wassergekühlten Innengewinde, an welches ein 50.58 g schweres Kupfergeflecht (Alfa Aesar; Lotnummer: J26j18; wiederverwendetes Material aus Beispiel 12) justiert wurde, vorgelegt. Dann werden 20 g (0.115 mol) PMDETA zugegeben und das Reaktionsgemisch von Raumtemperatur auf 95°C aufgewärmt. Sobald die Lösung die gewünschte Temperatur erreicht hat, werden 8.13 g (0.042 mol) EBiB zugegeben und das Reaktionsgemisch bei 95°C weitergerührt. Nach 21 Stunden erhält man ein Produkt in 92,7%-iger Ausbeute, welches einen Polydispersitätsindex von 1.27 sowie einen $M_n$-Wert von 143000 aufweist. Der entleerte Reaktionskessel enthielt keine sichtbaren Ablagerungen fester Katalysatorrückstände.

Beispiel 14 (B14):

Eine Mischung aus 6375 g DPMA, 1142.13 g MMA und 1500 g eines 100N-Öles (100N, paraffinisch, Petro Canada) wird in einem mit Stickstoff durchfluteten 20 l Polymerisationskessel, ausgestattet mit einem wassergekühlten Innengewinde, an welches ein 50.58 g schweres Kupfergeflecht (Alfa Aesar; Lotnummer: J26j18; wiederverwendetes Material aus Beispiel 13) justiert wurde, vorgelegt. Dann werden 20 g (0.115 mol) PMDETA zugegeben und das Reaktionsgemisch von Raumtemperatur auf 95°C aufgewärmt. Sobald die Lösung die gewünschte Temperatur erreicht hat, werden 5.85 g (0.030 mol) EBiB zugegeben und das Reaktionsgemisch bei 95°C weitergerührt. Nach 23 Stunden erhält man ein Produkt in 98,8%-iger Ausbeute, welches einen Polydispersitätsindex von 1.37 sowie einen $M_n$-Wert von 199000 aufweist. Der entleerte Reaktionskessel enthielt keine sichtbaren Ablagerungen fester Katalysatorrückstände.

Beispiel 15 (B15):

Die ATRP-Polymerisationsversuche gemäß Beispiel 15 folgende wurden in einem Vierhalsrundkolben durchgeführt, der mit Säbelrührer, Heizpilz, Stickstoffüberleitung und Intensivkühler ausgestattet war. Dabei wurde das Monomergemisch, welches aus 212,5 g (0,775 mol) Dodecylmethacrylat (DPMA, erhalten durch die Reaktion von ®Dobanol 25L (von Shell AG) mit Methylmethacrylat, wobei freigesetztes Methanol abgetrennt wurde), 10,12 g (0,060 mol) N,N-Dimethylaminopropylmethacrylat (DMAPMAm) und 37,5 g Methylmethacrylat bestand, und 51,6 g Mineralöl (paraffinbasisches 100N-Öl der Fa. Petro Canada) im Reaktionskolben vorgelegt und durch Trockeneiszugabe und Überleiten von Stickstoff inertisiert. Anschließend wurden 2 g Kupferfolie (Aldrich, Dicke 0,025 mm, zerteilt in Stücke einer

Größe von ca. 1 $cm^2$) und 900 mg (5,2 mmol) Pentamethyldiethylentriamin (PMDETA) zugegeben.

Nach Aufheizen auf 95°C wurden 0,97 g (5 mmol) para-Toluolsulfonylchlorid (TSCI) zugegeben. Nach einer Reaktionszeit von ca. 9 Stunden bei einer Temperatur von 95 °C wurde die Mischung auf Raumtemperatur abgekühlt. Anschließend wurde die Mischung mittels GPC analysiert.

Die erzielte Ausbeute betrug 87%. Das erhaltene Polymer wies eine Polydispersität von 1,48 sowie ein Zahlenmittel des Molekulargewichts von 37200 auf.

Vergleichsbeispiel 14 (VB14):

Das Beispiel 15 wurde im wesentlichen wiederholt. Als Katalysator wurde jedoch kein metallisches Kupfer sondern 250 mg (1,7 mmol) CuBr eingesetzt.

Die erzielte Ausbeute betrug 53%. Das erhaltene Polymer wies eine Polydispersität von 2,59 sowie ein Zahlenmittel des Molekulargewichts von 39800 auf.

Beispiel 16 (B16):

Das Beispiel 15 wurde im wesentlichen wiederholt. Als Katalysator wurde jedoch 0,98 g (5 mmol) Ethyl-2-bromisobutyrat (EBiB) anstatt pTSCI als Initiator eingesetzt wurden.

Die erzielte Ausbeute betrug 87%. Das erhaltene Polymer wies eine Polydispersität von 1,65 sowie ein Zahlenmittel des Molekulargewichts von 38900 auf.

Vergleichsbeispiel 15 (VB15):

Das Beispiel 16 wurde im wesentlichen wiederholt. Als Katalysator wurde jedoch kein metallisches Kupfer sondern 250 mg (1,7 mmol) CuBr eingesetzt.

Die erzielte Ausbeute betrug 42%. Das erhaltene Polymer wies eine Polydispersität von 2,91 sowie ein Zahlenmittel des Molekulargewichts von 22000 auf.

III. Ergebnisse

III.1) Einfluß der Länge der Alkylkette des Monomeren

Langkettig alkylsubstituierte (Meth)acrylate (Kohlenstoffkette im Esterrest größer oder gleich C10, im folgenden AMA's genannt) lassen sich im Vergleich zu "kurzkettigeren Methacrylaten" wie MMA oder BMA unter ansonsten analogen Prozeßbedingungen zu höheren Umsätzen und enger verteilten Produkten polymerisieren. Dies konnte durch Homopolymerisationen mit MMA, BMA bzw. DPMA (Dodecylpentadecylmethacrylat) in Lösung (in Toluol oder in einem gesättigten Kohlenwasserstoff wie 2,2,4-Trimethylpentan oder für BMA und DPMA auch iri Mineralöl) anhand der gemessenen Restmonomerkonzentrationen gezeigt werden (siehe Tabellen 1 bis 3).

Tabelle 1:

| Umsätze aus Homopolymerisationen von MMA, BMA bzw, DPMA in Toluol | | | | | | | |
|---|---|---|---|---|---|---|---|
| | MMA | | BMA | | DPMA | | |
| Kat.-quelle | Rest-mon. [%] | Umsatz [%] | Rest-mon. [%] | Umsatz [%] | Rest-mon. [%] | Umsatz [%] | Nr. |
| $Cu(I)_2O$ | 59,5 | 40,5 | | | | | VB1 |
| Cu(I)Br | 78 | 22 | | | | | VB3 |
| Cu-Pulv. | 51,3 | 48,7 | | | | | VB5 |
| Cu-Folie | 13 | 87 | | | | | VB7 |
| $Cu(I)_2O$ | | | 60,3 | 39,7 | | | VB2 |
| Cu(I)Br | | | 56,8 | 43,2 | | | VB4 |
| Cu-Pulv. | | | 16 | 84 | | | VB6 |
| Cu-Folie | | | 15 | 85 | | | VB8 |

Tabelle 1: (fortgesetzt)

| Umsätze aus Homopolymerisationen von MMA, BMA bzw, DPMA in Toluol | | | | | | | |
|---|---|---|---|---|---|---|---|
| | MMA | | BMA | | DPMA | | |
| Kat.-quelle | Rest-mon. [%] | Umsatz [%] | Rest-mon. [%] | Umsatz [%] | Rest-mon. [%] | Umsatz [%] | Nr. |
| $Cu(I)_2O$ | | | | | 8,4 | 91,6 | B1 |
| Cu(I)Br | | | | | 4,3 | 95,7 | B2 |
| Cu-Pulv. | | | | | 2,6 | 97,4 | B3 |
| Cu-Folie | | | | | 0,4 | 99,6 | B4 |

Homopolymerisationen 3 molar in Bezug auf Monomerkonz. in Toluol (T=95°C);
Initiator:TsCl (0.23 Gew.% bezogen auf Gesamtgewicht), außer in CuBr katalysierten Reaktionen (hier EBiB, ebenfalls 0.23 Gew.%);
Ligand: PMDETA ([Kat.]:[Lig.]=1:2)
$Cu_2O$ Konz.: [Kat.]:[Init.] = 0.05:1 (entspr. 70 ppm Cu);
CuBr Kat.-Konz.: [Kat.]:[Init] = 0.1:1;
Ansaetze liefen ueber 9h;
Cu-Pulver: 80 ppm; Ligandmenge: [Lig.]:[Init.]=0.1:1
Cu-Folie: 0.6 Gew.% (in 1 $cm^2$ grossen Stücken, Dicke: 0,025 mm, Cu in Lösung < 100 ppm); Ligandmenge: [Lig.]:[Init.]=0.1:1;
Restmonomer sowie Umsatz in Gew.% des Gesamtmonomergehaltes
$M_n$ th.: PMMA (25000), PBMA (35500), PDPMA (68500)
$M_w/M_n$: Sämtliche Polydispersitäten lagen in einem Bereich zwischen 1.1 und 1.35

Tabelle 2:

| Umsätze aus Homopolymerisationen von MMA, BMA bz DPMA in Trimethylpentan (analoge Reaktionsbedingungen wie in Tabelle 1 angegeben) | | | |
|---|---|---|---|
| Versuch | **VB9** | **VB10** | **B5** |
| Katalysator | $Cu_2O$ (I) | $Cu_2O$ (I) | $Cu_2O$ (I) |
| Monomer | **MMA** | **BMA** | **DPMA** |
| | | | |
| Umsatz | 34 | 38,9 | 67,1 |

Tabelle 3:

| Umsätze aus Homopolymerisationen von BMA bzw. DPMA in einem naphthenischen Grundöl (analoge Reaktionsbedingungen wie in Tabelle 1 angegeben) | | |
|---|---|---|
| Versuch | **VB11** | **B6** |
| Katalysator | $Cu_2O$ (I) | $Cu_2O$ (I) |
| Monomer | **BMA** | **DPMA** |
| | | |
| Umsatz | 54,2 | 98,4 |

Die folgende Tabelle 4 fasst Ergebnisse der ATRP-Synthese von Polymeren mit höherem Molekulargewicht zusammen. Hierbei wurden AMA's oder AMA-haltige Monomermischungen unter Einsatz einer metallenen Kupferquelle polymerisiert, wobei die Konzentration des am Ende der Polymerisation in der Zusammensetzung bestimmten Kupfers mit einem Wert von weniger als 70 ppm relativ niedrig lag.

Tabelle 4:

| Synthese von Polymeren mit höheren Molekulargewichten mittels ATRP (Katalysator: Cu(O)) | | | | | | | |
|---|---|---|---|---|---|---|---|
| **Nr.** | **Monomere** | **[Lig]:[In it]** | **Mn th.** | **Mn exp.** | **DP th.** | **DP exp.** | **Mw/M n** |
| | | | | | | | |
| B7 | DPMA:MMA= 0,85: 0,15 | 5 | 250000 | 188000 | 1008 | 758 | 1,26 |
| B8 | DPMA:MMA=0,85: 0,15 | 1,82 | 180000 | 142000 | 726 | 573 | 1,21 |
| | | | | | | | |
| VB12 | MMA | 5 | 100000 | 69800 | 1000 | 698 | 2,26 |
| VB13 | BMA | 5 | 142000 | 112000 | 1000 | 788 | 1,78 |

Initiator: Tosylchlorid, Ligand: PMDETA, Temperatur: 95°C,
Reaktionszeiten: 15 h;
DP=Polymerisationsgrad;$DP_{exp}$ errechnet sich aus $M_n$exp/mittleres Molekulargewicht des Monomeren; $DP_{th}$ errechnet sich aus $M_n$th/mittleres Molekulargewicht des Monomeren
Ausgangskonzentration: 3 mol Monomer in Mineralöl (DPMA/MMA);
3 mol Monomer in Toluol für MMA bzw. BMA-Ansätze;
0.66 Gew.% Kupferfolie in Bezug auf Gesamtgewicht (in 1 $cm^2$ grossen Stuecken, Dicke: 0,025 mm, Kupfergehalt der Lösung < 70 ppm);

Polymerisationen unter einem angestrebten Polymerisationsgrad von 1000 ausgehend von MMA bzw. BMA führten zu größeren Polydispersitäten. ATRP-Prozesse mit einer DPMA/MMA-Mischung (Gewichtsverhältnis 0.85: 0.15) lieferten auch unter erhöhten Polymerisationsgraden (DP = 1008 für ein angestrebtes Mn von 250000 bzw. DP = 725 für ein angestrebtes Mn von 180000) Produkte mit engverteilten Mw/Mn-Werten (siehe Tabelle 4).

Der analoge Trend zu den in Tabellen 1 bis 3 sowie 4 zusammengefassten Ergebnissen traf wie eingangs erwähnt ebenso zu, sofern Ethyl-2-isobutyrat (EBiB) anstatt des *p*-Toluolsulfonylchlorids (TsCl) als Initiator verwendet wurde (s. Tab. 5). Die Verwendung eines Kupfernetzes als Katalysator (Edelstahlkessel, Volumen: 20 l, Volumen der Reaktionslösung ca. 10 l) führte auch im Falle des Anstrebens erhöhter Molekulargewichte (Beispiele B13 und B14 in Tab. 5) zu engen Molmassenverteilungen und war mit vergleichbaren Reaktionszeiten verbunden wie sie für TsCl initiierte Synthesen beobachtet wurden. Die Konzentration des in der Reaktionsmischung gelösten Kupfers betrug bei allen in Tabelle 5 gezeigten Ansätzen zwischen 20 und 80 ppm.

Insbesondere bei den in Tabelle 5 zusammengefassten Versuchen kann festgestellt werden, daß sich AMA-haltige ATRP-Ansätze ohne sichtbare Ablagerung von Katalysatorrückständen im Reaktionsbehälter durchführen lassen.

Tabelle 5:

| ATRP-Versuche mit EBiB unter Einbeziehung eines Cu(0)-Katalysators in Mineralöl (Temp: 95°C) | | | | | | | | |
|---|---|---|---|---|---|---|---|---|
| **Mon. -Konz.** | **Cu Netz** | | **EBi B** | **PMDET A** | **Mn** | | | **Umsat z** |
| Beispiel | Cu(I) +Cu (II) Gehalt | Oberfl. reell | | | Theorie | Exp. | PDI | |
| (%) | ppm | ($cm^2$) | (g) | (g) | (g/mol) | (g/mol) | | % (h) |
| 100 B9 | | 1991 | 122,7 | 20 | 12.000 | 15.100 | 1,10 | 98,7 (3) 97,4 (2) |
| 100 B10 | 89 | 991 | 122,7 | 20 | 12.000 | 15.700 | 1,11 | 98,8 (4) 98,2 (2) |
| | | | | | | | | |

Tabelle 5: (fortgesetzt)

| ATRP-Versuche mit EBiB unter Einbeziehung eines Cu(0)-Katalysators in Mineralöl (Temp: 95°C) | | | | | | | | |
|---|---|---|---|---|---|---|---|---|
| **Mon. -Konz.** | **Cu Netz** | | **EBi B** | **PMDET A** | **Mn** | | | **Umsat z** |
| Beispiel | Cu(I) +Cu (II) Gehalt | Oberfl. reell | | | Theorie | Exp. | PDI | |
| (%) | ppm | ($cm^2$) | (g) | (g) | (g/mol) | (g/mol) | | % (h) |
| 83,4 B11 | 21 | 1991 | 50,0 | 20 | 29.250 | 29.400 | 1,26 | 93,0 (6) |
| 83,4 B12 | | 991 | 50,0 | 20 | 29.250 | 34.100 | 1,48 | 82,6 (6) |
| | | | | | | | | |
| 83,4 B13 | 18 | 991 | 8,13 | 20 | 180.000 | 143.000 | 1,27 | 92,7 (21) 89,9 (13) |
| | | | | | | | | |
| 80,0 B14 | 30 | 991 | 5,85 | 20 | 250.000 | 199.000 | 1,37 | 98,8 (23) |

Aus den gezeigten Ergebnissen ist unter anderem ersichtlich, daß die Verwendung von $Cu_2O$ anstelle von CuBr noch weniger Katalysatormaterial unter gleichbleibenden Reaktionsbedingungen erfordert. In ATRP-Experimenten mit $Cu_2O$ stellte sich zudem heraus, daß ungelöstes $Cu_2O$ aufgrund seiner feinpulvrigen Konsistenz zu Beginn der Reaktion wesentlich einfacher homogen im Reaktionsgemisch zu verteilen war und eine geringere Tendenz als CuBr aufwies, sich in weniger gut durchmischten Zonen des Reaktionsbehälters abzulagern.

Femer wurde festgestellt, daß im Falle der Verwendung einer metallenen Kupferquelle ((etwa von Kupferfolie oder eines Kupfergeflechtes als Katalysatormaterial) (Substanz- oder Polymerisation in Lösung mit Mineralöl oder Toluol als Lösemittel)) durchweg Ablagerungen von entweder nicht abreagiertem Katalysator oder ausgefallenen Metallverbindungen vollständig vermieden werden konnten.

Die Verwendung von Cu(0)-Materialien als Katalysatoren oder Katalysatorquellen in AMA-haltigen ATRP-Prozessen ermöglicht es, dem Reaktionsgemisch eine große Oberfläche anzubieten, wobei die Katalysatorquelle zugleich in einer stationären Phase vorliegt und daher einfach wiederverwendet werden kann. Man kann spekulieren, dass aktive Katalysatorspezies aus dem festen Metallverband herausgelöst werden und im Reaktionsgemisch homogen verteilt werden. Mittels eines solchen Konzeptes werden dem Reaktionsgemisch nur soviele metallhaltige Spezies zugeführt wie sie für einen ATRP-Prozess tatsächlich benötigt werden. Elementares Kupfer stellt für einen solchen Prozess eine wohlfeile Quelle dar, was sich in Experimenten unter Zuhilfenahme einer Kupferfolie oder eines im Synthesekessel fest installierten Geflechtes bestätigen läßt (s. Tabelle 1,4,5). Da elementares Kupfer gänzlich unlöslich in den hier beschriebenen Monomermischungen ist, kann man davon ausgehen, daß der Übergang von Kupferspezies in die gelöste Form auf die Aktivierungsreaktion zwischen Initiator und Cu(O) zurückzuführen ist. Trotz geringer Katalysatorkonzentrationen (< 200 ppm, vorzugsweise < 100 ppm, besonders zweckmäßig 20-80 ppm Cu) in der flüssigen Phase wurden mit AMA-haltigen Monomermischungen engverteilte Produkte in hohen Umsatzraten und innerhalb befriedigender Reaktionszeiten erhalten.

Die verwendeten Cu(O)-Katalysatoren konnten in nachfolgenden ATRP-Experimenten wiederverwendet werden. Bezüglich der Katalysatoraktivität konnte im Vergleich zur Verwendung von neuen Kupfermaterialien kein Unterschied festgestellt werden, was die bequeme Wiederverwendung des Katalysators auch in großtechnischen Prozessen erlaubt.

Überraschenderweise konnte weiterhin festgestellt werden, daß sich dispergierende Monomere wie etwa Dimethylaminopropylmethacrylamid (DMAPMAm) oder solche dispergierende Monomere aufweisende Monomermischungen unter Einsatz von metallenen Kupferquellen oder oxidischen Kupfer(I)-Salzen ausgezeichnet polymerisieren (Beispiele 15 und 16 sowie Vergleichsbeispiele 14 und 15) lassen. Speziell für die Verwendung von Kupfer(I)oxid, ließ sich eindeutig zeigen, daß Umsetzungen unter Zuhilfenahme von $Cu_2O$ durch vollständige Umsätze charakterisiert waren.

## Patentansprüche

1. Verfahren zur Herstellung von Polymerzusammensetzungen, bei dem man ethylenisch ungesättigte Monomere mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert, **dadurch gekennzeichnet, daß** man ethylenisch ungesättigte Monomere, die 50 bis 100 Gew.-%, bezogen auf das Gesamtgewicht der ethylenisch ungesättigten Monomere, einer oder mehreren ethylenisch ungesättigten Esterverbindungen der Formel (I)

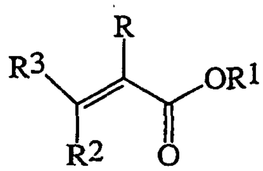

(I),

worin R Wasserstoff oder Methyl, $R^1$ einen linearen oder verzweigten Alkylrest mit 8 bis 40, vorzugsweise 10 bis 40, Kohlenstoffatomen, $R^2$ und $R^3$ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt, aufweisen, in Gegenwart von Kupfer polymerisiert, wobei die gesamte Konzentration an Kupfer der Oxidationsstufen (I) und (II) in der Polymerisationszusammensetzung ≤ 200 ppm, bezogen auf das gesamte Gewicht der Zusammensetzung vermindert um das Gewicht an Kupfer der Oxidationsstufe (O) in der Zusammensetzung, ist.

2. Verfahren gemäß Anspruch 1, **dadurch gekennzeichnet, daß** die gesamte Konzentration an Kupfer der Oxidationsstufen (I) und (II) ir der Zusammensetzung ≤ 150 ppm, vorzugsweise ≤ 100 ppm, bezogen auf das gesamte Gewicht der Zusammensetzung vermindert um das Gewicht an Kupfer der Oxidationsstufe (O) in der Zusammensetzung, ist.

3. Verfahren gemäß einem der vorhergehenden Ansprüche, **dadurch gekennzeichnet, daß** als Quelle für das Kupfer der Oxidationsstufen . (I) und (II) in der Polymerisationszusammensetzung metallisches Kupfer eingesetzt wird.

4. Verfahren gemäß Anspruch 3, **dadurch gekennzeichnet, daß** man als Kupferquelle Kupferblech, Kupferdraht, Kupferfolie, Kupferspäne, Kupfemetz, Kupfergeflecht, Kupfergewebe und/oder Kupferpulver einsetzt.

5. Verfahren gemäß einem der vorhergehenden Ansprüche 1 oder 2, **dadurch gekennzeichnet, daß** man als Quelle für das Kupfer der Oxidationsstufen (I) und (II) ein Kupfersalz in der Polymerisationszusammensetzung einsetzt.

6. Verfahren gemäß Anspruch 5, **dadurch gekennzeichnet, daß** man als Kupfersalz ein Kupferhalogenid, besonders bevorzugt Kupfer(I)chlorid, einsetzt.

7. Verfahren gemäß einem oder mehreren der vorhergehenden Ansprüche, **dadurch gekennzeichnet, daß** man Polymere mit einem Gewichtsmittel des Molekulargewichts ≥ 7 000 g/mol, herstellt.

8. Verfahren gemäß einem oder mehreren der vorhergehenden Ansprüche, **dadurch gekennzeichnet, daß** man Polymere mit einer Polydispersität ≤ 2,0 herstellt.

9. Verfahren nach einem oder mehreren der vorhergehenden Ansprüche, **dadurch gekennzeichnet, daß** man eine Monomerzusammensetzung polymerisiert aufweisend mindestens 50 Gew.-% eines oder mehrerer (Meth)acrylate der Formel (II)

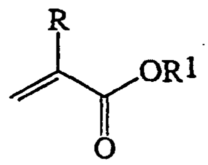

(II),

worin
R Wasserstoff oder Methyl und $R^1$ einen linearen oder verzweigten Alkylrest mit 8 bis 40, vorzugsweise 10 bis 40, Kohlenstoffatomen bedeuten.

**10.** Verfahren nach einem oder mehreren der vorhergehenden Ansprüche, **dadurch gekennzeichnet, daß** man eine Monomerzusammensetzung polymerisiert aufweisend

a) 60 bis 100 Gew.-% einer oder mehreren ethylenisch ungesättigten Esterverbindungen der Formel (I)

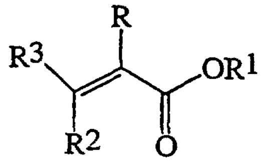

(I),

worin R Wasserstoff oder Methyl, $R^1$ einen linearen oder verzweigten Alkylrest mit 8 bis 40, vorzugsweise 10 bis 40, Kohlenstoffatomen, $R^2$ und $R^3$ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt,

b) 0 bis 40 Gew.-% eines oder mehrerer (Meth)acrylate der Formel (III)

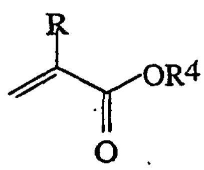

(III),

worin R Wasserstoff oder Methyl und $R^4$ einen linearen oder verzweigten Alkylrest mit 1 bis 7 Kohlenstoffatomen bedeuten,

c) 0 bis 40 Gew.-% eines oder mehrerer (Meth)acrylate der Formel (IV)

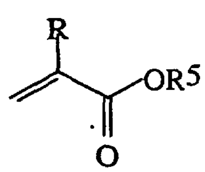

(IV),

worin R Wasserstoff oder Methyl und $R^5$ einen mit einer OH-Gruppe substituierten Alkylrest mit 2 bis 20 Kohlenstoffatomen oder einen alkoxylierten Rest der Formel (V)

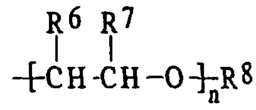

(V),

worin $R^6$ und $R^7$ unabhängig für Wasserstoff oder Methyl, $R^8$ Wasserstoff oder einen Alkylrest mit 1 bis 40 Kohlenstoffatomen und n eine ganze Zahl von 1 bis 60 steht, bedeuten,

d) 0 bis 40 Gew.-% eines oder mehrerer (Meth)acrylate der Formel (VI)

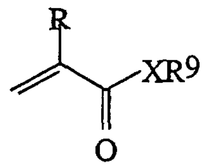

(VI),

worin R Wasserstoff oder Methyl, X Sauerstoff oder eine Aminogruppe der Formel -NH- oder $-NR^{10}-$, worin $R^{10}$ für einen Alkylrest mit 1 bis 40 Kohlenstoffatomen steht; und $R^9$ einen mit mindestens einer $-NR^{11}R^{12}$-Gruppe substituierten linearen oder verzweigten Alkylrest mit 2 bis 20, vorzugsweise 2 bis 6 Kohlenstoffatomen bedeuten, wobei $R^{11}$ und $R^{12}$ unabhängig von einander für Wasserstoff, einen Alkylrest mit 1 bis 20, vorzugsweise 1 bis 6 stehen oder worin $R^{11}$ und $R^{12}$ unter Einbeziehung des Stickstoffatoms und gegebenenfalls eines weiteren Stickstoff oder Sauerstoffatoms einen 5- oder 6-gliederigen Ring bilden, der gegebenenfalls mit $C_1$-$C_6$-Alkyl substituiert sein kann, und

e) 0 bis 40 Gew.-% eines oder mehrerer Comonomere, wobei sich die Angabe Gew.-% jeweils auf das Gesamtgewicht der ethylenisch ungesättigten Monomere bezieht.

**11.** Verfahren nach einem der vorhergehenden Ansprüche, **dadurch gekennzeichnet, daß** man als Comonomere Styrol, (Meth)acrylat-Derivate und/oder dispergierende Monomere einsetzt.

**12.** Verfahren gemäß einem oder mehreren der vorhergehenden Ansprüche, **dadurch gekennzeichnet, daß** man mindestens einen Chelatliganden einsetzt, der N-Atome enthält.

**13.** Verfahren gemäß einem oder mehreren der vorhergehenden Ansprüche, **dadurch gekennzeichnet, daß** man einen Initiator einsetzt, der Cl, Br, I, SCN und/oder $N_3$ aufweist.

**14.** Verfahren gemäß einem oder mehreren der vorhergehenden Ansprüche, **dadurch gekennzeichnet, daß** man in Lösung polymerisiert.

**15.** Verfahren gemäß einem der vorhergehenden Ansprüche, **dadurch gekennzeichnet, daß** man ein Mineralöl und/oder ein synthetisches Öl als Lösungsmittel einsetzt.

**16.** Verfahren gemäß Anspruch 15, **dadurch gekennzeichnet, daß** man das Lösungsmittel in einer Menge im Bereich von 5 bis 95 Gew.-%, bezogen auf das Gesamtgewicht der flüssigen Zusammensetzung, einsetzt.

**17.** Verfahren gemäß Anspruch 16, **dadurch gekennzeichnet, daß** man das Lösungsmittel in einer Menge im Bereich von 10 bis 60 Gew.-%, bezogen auf das Gesamtgewicht der flüssigen Zusammensetzung, einsetzt.

**18.** Verfahren nach einem der vorhergehenden Ansprüche, **dadurch gekennzeichnet, daß** man in der Zusammensetzung ein Copolymer mit einem nicht-statistischen Aufbau, vorzugsweise ein Diblock-, Triblock- oder ein Gradientenpolymer herstellt.

**19.** Verfahren zur Herstellung von Polymeren, **dadurch gekennzeichnet, daß** man aus einer Polymerlösung, die gemäß einem oder mehreren der Verfahren 1 bis 18 erhalten wurde, das Polymer isoliert.

**20.** Verwendung einer Polymerzusammensetzung, die nach einem Verfahren gemäß einem oder mehreren Ansprüche der 1 bis 18 erhalten wurde, als Zusatz zu Schmierölen.

## Claims

**1.** Process for preparing polymer compositions wherein ethylenically unsaturated monomers are polymerised by means of initiators which comprise a transferable atomic group, and one of more catalysts which comprise at least one transition metal, in the presence of ligands which are capable of forming a coordination compound with the metallic catalyst or catalysts, **characterised in that** ethylenically unsaturated monomers which comprise 50 to 100 wt.%, based on the total weight of the ethylenically unsaturated monomers, of one or more ethylenically unsaturated ester compounds of formula (I)

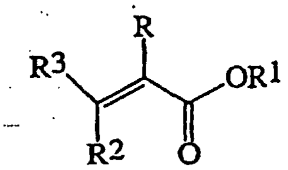

(I)

wherein R denotes hydrogen or methyl, $R^1$ denotes a straight-chain or branched alkyl group having 8 to 40, preferably 10 to 40, carbon atoms, $R^2$ and $R^3$ independently represent hydrogen or a group of formula -COOR', wherein R' denotes hydrogen or a straight chain or branched alkyl group having 8 to 40, preferably 10 to 40, carbon atoms, are polymerised in the presence of copper, the total concentration of copper in oxidation states (I) and (II) in the polymerisation composition being ≤200 ppm, based on the total weight of the composition, minus the weight of copper of oxidation state (O) in the composition.

**2.** Process according to claim 1, **characterised in that** the total concentration of copper of oxidation states (I) and (II) in the composition is ≤150 ppm, preferably ≤ 100 ppm, based on the total weight of the composition, minus the weight of copper of oxidation state (O) in the composition.

**3.** Process according to one of the preceding claims, **characterised in that** metallic copper is used as the source of the copper of oxidation states (I) and (II) in the polymerisation composition.

**4.** Process according to claim 3, **characterised in that** the copper source used is copper leaf, copper wire, copper foil, copper chips, copper net, copper mesh, copper fabric and/or copper powder.

**5.** Process according to one of the preceding claims 1 or 2, **characterised in that** a copper salt is used in the polymerisation composition as a source for the copper of oxidation states (I) and (II).

**6.** Process according to claim 5, **characterised in that** a copper halide, most preferably copper (I) chloride is used as the copper salt.

**7.** Process according to one or more of the preceding claims, **characterised in that** polymers with a weight average of molecular weight of ≥ 7000 g/mol are prepared.

**8.** Process according to one or more of the preceding claims, **characterised in that** polymers with a polydispersity of ≤ 2.0 are prepared.

**9.** Process according to one of more of the preceding claims, **characterised in that** a monomer composition is polymerised containing at least 50 wt.% of one or more (meth)acrylates of formula (II)

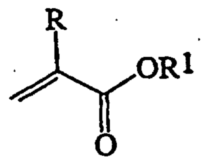

(II)

wherein R denotes hydrogen or methyl and $R^1$ denotes a straight chain or branched alkyl group having 8 to 40, preferably 10 to 40, carbon atoms.

**10.** Process according to one or more of the preceding claims, **characterised in that** a monomer composition is polymerised containing

a) 60 to 100 wt.% of one or more ethylenically unsaturated ester compounds of formula (I)

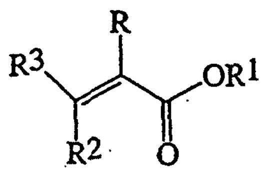

(I)

wherein R denotes hydrogen or methyl, $R^1$ denotes a straight chain or branched alkyl group having 8 to 40, preferably 10 to 40, carbon atoms, $R^2$ and $R^3$ independently represent hydrogen or a group of formula -COOR', wherein R' denotes hydrogen or a straight chain or branched alkyl group having 8 to 40, preferably 10 to 40, carbon atoms,

b) 0 to 40 wt.% of one or more (meth)acrylates of formula (III)

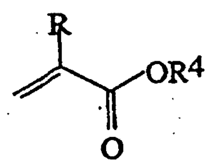

(III)

wherein R denotes hydrogen or methyl and $R^4$ denotes a straight chain or branched alkyl group with 1 to 7 carbon atoms,

c) 0 to 40 wt.% of one or more (meth)acrylates of formula (IV)

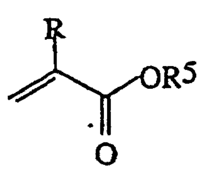

(IV)

wherein R denotes hydrogen or methyl and $R^5$ denotes an alkyl group having 2 to 20 carbon atoms substituted by an OH-group, or an alkoxylated group of formula (V)

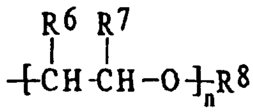

(V)

wherein $R^6$ and $R^7$ independently represent hydrogen or methyl, $R^8$ represents hydrogen or an alkyl group with 1 to 40 carbon atoms and n is an integer from 1 to 60,

d) 0 to 40 wt.% of one or more (meth)acrylates of formula (VI)

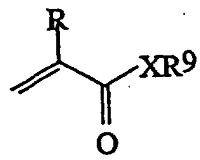

(VI)

wherein R denotes hydrogen or methyl, X denotes oxygen or an amino group of the formula -NH- or $-NR^{10}-$, wherein $R^{10}$ denotes an alkyl group having 1 to 40 carbon atoms, and $R^9$ denotes a straight chain or branched alkyl group having 2 to 20, preferably 2 to 6 carbon atoms, which is substituted by at least one $-NR^{11}R^{12}-$group, wherein $R^{11}$ and $R^{12}$ independently of one another represent hydrogen, an alkyl group with 1 to 20, preferably 1 to 6, or wherein $R^{11}$ and $R^{12}$, with the inclusion of the nitrogen atom and optionally another nitrogen or oxygen atom, form a 5- or 6- membered ring which may optionally be substituted by $C_{1-6}$ alkyl, and

e) 0 to 40 wt.% of one or more comonomers, where the term wt.% in each case refers to the total weight of the ethylenically unsaturated monomers.

**11.** Process according to one of the preceding claims, **characterised in that** styrene, (meth)acrylate derivatives and/or dispersing monomers are used as comonomers.

**12.** Process according to one or more of the preceding claims, **characterised in that** at least one chelate ligand is used which contains N atoms.

**13.** Process according to one or more of the preceding claims, **characterised in that** an initiator is used which comprises Cl, Br, I, SCN and/or $N_3$.

**14.** Process according to one or more of the preceding claims, **characterised in that** the polymerisation is carried out in solution.

**15.** Process according to one of the preceding claims, **characterised in that** a mineral oil and/or a synthetic oil is used as solvent.

**16.** Process according to claim 15, **characterised in that** the solvent is used in an amount in the range from 5 to 95 wt.%, based on the total weight of the liquid composition.

**17.** Process according to claim 16, **characterised in that** the solvent is used in an amount in the range from 10 to 60 wt.%, based on the total weight of the liquid composition.

**18.** Process according to one of the preceding claims, **characterised in that** a copolymer with a non-random structure, preferably a diblock, triblock or gradient polymer is prepared in the composition.

**19.** Process for preparing polymers, **characterised in that** the polymer is isolated from a polymer solution obtained according to one or more of processes 1 to 18.

**20.** Use of a polymer composition which has been obtained by a process according to one or more of claims 1 to 18,

as an additive for lubricating oils.

## Revendications

1. **1.** Procédé de production de compositions polymères, dans lequel on polymérise des monomères éthyléniquement insaturés au moyen d'initiateurs qui présentent un groupe atomique transférable, et d'un ou plusieurs catalyseurs qui comprennent au moins un métal de transition, en présence de ligands qui peuvent former avec le ou les catalyseurs métalliques un composé de coordination,
**caractérisé en ce qu'**
on polymérise en présence de cuivre des monomères éthyléniquement insaturés qui présentent de 50 à 100 % en poids, par rapport au poids total des monomères éthyléniquement insaturés, d'un ou plusieurs composés esters éthyléniquement insaturés de formule (I)

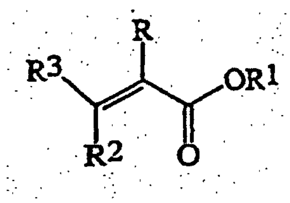

(I),

dans laquelle R représente un hydrogène ou un méthyle, $R^1$ représente un radical alkyle linéaire ou ramifié comportant de 8 à 40, de préférence de 10 à 40 atomes de carbone, $R^2$ et $R^3$ représentent indépendamment un hydrogène ou un groupe de formule -COOR', dont R' représente un hydrogène ou un radical alkyle linéaire ou ramifié comportant de 8 à 40, de préférence de 10 à 40 atomes de carbone, la concentration totale de cuivre des degrés d'oxydation (I) et (II) dans la composition de polymérisation étant ≤ 20 ppm, par rapport au poids total de la composition, quantité diminuée du poids de cuivre de degré d'oxydation (0) dans la composition.

**2.** Procédé selon la revendication 1,
**caractérisé en ce que**
la concentration totale de cuivre des degrés d'oxydation (I) et (II) dans la composition ≤ 150 ppm, de préférence ≤ 100 ppm, par rapport au poids total de la composition, quantité diminuée du poids de cuivre de degré d'oxydation (0) dans la composition.

**3.** Procédé selon l'une des revendications précédentes,
**caractérisé en ce qu'**
on utilise du cuivre métal comme source de cuivre de degrés d'oxydation (I) et (II) dans la composition de polymérisation.

**4.** Procédé selon la revendication 3,
**caractérisé en ce qu'**
on utilise comme source de cuivre une tôle de cuivre, un fil de cuivre, une feuille de cuivre, des tournures de cuivre, une maille de cuivre, un treillis de cuivre, un tissu de cuivre et/ou une poudre de cuivre.

**5.** Procédé selon une ou plusieurs des revendications 1 ou 2 précédentes,
**caractérisé en ce que**
comme source de cuivre de degrés d'oxydation (I) et (II) on utilise un sel de cuivre dans la composition de polymérisation.

**6.** Procédé selon la revendication 5,
**caractérisé en ce que**
comme sel de cuivre on utilise un halogénure de cuivre, de façon particulièrement préférée le chlorure de cuivre (I).

**7.** Procédé selon une ou plusieurs des revendications précédentes,
**caractérisé en ce qu'**
on produit des polymères présentant une moyenne de poids moléculaire en poids ≥ 7000 g/mol.

**8.** Procédé selon une ou plusieurs des revendications précédentes, **caractérisé en ce qu'** on produit des polymères présentant une polydispersité ≤ 2,0.

**9.** Procédé selon une ou plusieurs des revendications précédentes, **caractérisé en ce qu'** on polymérise une composition monomère présentant au moins 50 % en poids d'un ou plusieurs (méth)acrylates de formule (II)

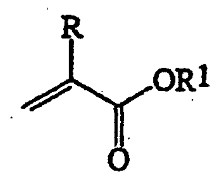

(II),

danslaquelle
R représente un hydrogène ou un méthyle et $R^1$ représente un radical alkyle linéaire ou ramifié comportant de 8 à 40, de préférence de 10 à 40 atomes de carbone.

**10.** Procédé selon une ou plusieurs des revendications précédentes, **caractérisé en ce qu'** on polymérise une composition monomère présentant

a) 60 à 100 % en poids d'un ou plusieurs composés esters éthyléniquement insaturés de formule (I)

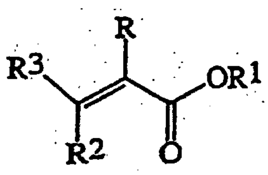

(I),

dans laquelle R représente un hydrogène ou un méthyle, $R^1$ représente un radical alkyle linéaire ou ramifié comportant de 8 à 40, de préférence de 10 à 40 atomes de carbone, $R^2$ et $R^3$ représentent indépendamment un hydrogène ou un groupe de formule -COOR', où R' représente un hydrogène ou un radical alkyle linéaire ou ramifié comportant de 8 à 40, de préférence de 10 à 40 atomes de carbone,
b) 0 à 40 % en poids d'un ou plusieurs (méth)acrylates de formule (III)

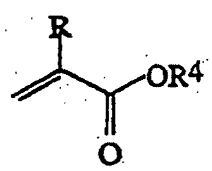

(III),

dans laquelle R représente un hydrogène ou un méthyle et $R^4$ représente un radical alkyle linéaire ou ramifié comportant de 1 à 7 atomes de carbone,
c) 0 à 40 % en poids d'un ou plusieurs (méth)acrylates de formule (IV)

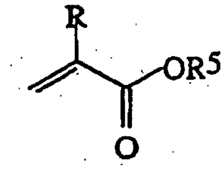

(IV),

dans laquelle R représente un hydrogène ou un méthyle et $R^5$ représente un radical alkyle substitué par un groupe OH et comportant de 2 à 20 atomes de carbone ou un radical alcoxylé de formule (V)

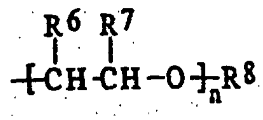

(V),

dans laquelle $R^6$ et $R^7$ représentent indépendamment un hydrogène ou un méthyle, $R^8$ représente un hydrogène ou un radical alkyle comportant de 1 à 40 atomes de carbone et n représente un nombre entier allant de 1 à 60,

d) 0 à 40 % en poids d'un ou plusieurs (méth)acrylates de formule (VI)

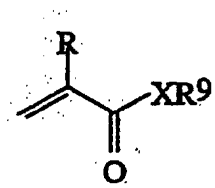

(VI),

dans laquelle R représente un hydrogène ou un méthyle, X représente un oxygène ou un groupe amino de formule -NH- dont $-NR^{10}-$, où $R^{10}$ représente un radical alkyle comportant de 1 à 40 atomes de carbone, et $R^9$ représente un radical alkyle linéaire ou ramifié substitué avec au moins un groupe $-NR^{11}R^{12}$ et comportant de 2 à 20, de préférence de 2 à 6 atomes de carbone, avec $R^{11}$ et $R^{12}$ représentant indépendamment l'un de l'autre un hydrogène, un radical alkyle comportant de 1 à 20, de préférence de 1 à 6 atomes de carbone, avec bien où $R^{11}$ et $R^{12}$, en tenant compte de l'atome d'azote et le cas échéant d'un autre atome d'azote ou d'oxygène, forment un noyau à 5 ou 6 chaînons, qui le cas échéant peut être substitué par un alkyle en $C_1$ à $C_6$, et

e) 0 à 40 % en poids d'un ou plusieurs comonomères, les indications en pourcentage se rapportant toujours au poids total des monomères éthyléniquement insaturés.

**11.** Procédé selon l'une des revendications précédentes,
**caractérisé en ce qu'**
on utilise comme comonomères le styrène, les dérivés de (méth)acylate et/ou des monomères dispersants.

**12.** Procédé selon une ou plusieurs des revendications précédentes,
**caractérisé en ce qu'**
on utilise au moins un ligand de chélate qui contient des atomes d'azote.

**13.** Procédé selon une ou plusieurs des revendications précédentes,
**caractérisé en ce qu'**
on utilise un initiateur qui présente Cl, Br, I, SCN et/ou $N_3$.

**14.** Procédé selon une ou plusieurs des revendications précédentes,
**caractérisé en ce qu'**
on polymérise en solution.

**15.** Procédé selon l'une des revendications précédentes,
**caractérisé en ce qu'**

on utilise une huile minérale et/ou une huile synthétique comme solvant.

**16.** Procédé selon la revendication 15,
**caractérisé en ce qu'**
on utilise le solvant en une quantité allant de 5 à 95 % en poids, par rapport au poids total de la composition liquide.

**17.** Procédé selon la revendication 16,
**caractérisé en ce qu'**
on utilise le solvant en une quantité allant de 10 à 60 % en poids, par rapport au poids total de la composition liquide.

**18.** Procédé selon l'une des revendications précédentes,
**caractérisé en ce que**
dans la composition on produit un copolymère présentant une structure non statistique, de préférence un polymère diséquencé, un polymère triséquencé ou un polymère à gradient.

**19.** Procédé de production de polymères,
**caractérisé en ce qu'**
on isole le polymère à partir d'une solution de polymères obtenue par un procédé selon l'une ou plusieurs des revendications 1 à 18.

**20.** Utilisation d'une composition obtenue par un procédé selon l'une ou plusieurs des revendications 1 à 18, comme additifs à des huiles de graissage.